# EUROPEAN PATENT APPLICATION

(11) **EP 4 485 882 A1**
(43) Date of publication of application: **01.01.2025**
(21) Application number: 23777877.4
(22) Date of filing: 17.03.2023
(51) Int. Cl.: H04L 45/00

(54) **TRAFFIC REINJECTION METHOD AND PROTECTION SYSTEM**

(30) Priority: 28.03.2022 CN 202210314660
(71) Applicant: Huawei Technologies Co., Ltd., Shenzhen, Guangdong 518129 (CN)
(72) Inventor: WU, Bo, Shenzhen, Guangdong 518129 (CN)
(74) Representative: Pfenning, Meinig & Partner mbB
(86) International application number: PCT/CN2023/082072
(87) International publication number: WO 2023/185502

(57) **Abstract**

This application provides a traffic injection method and a protection system, and pertains to the field of network security. This application provides an SRv6 based traffic injection manner. After scrubbing traffic, a protection system adds an SRv6 SID of a router at an upstream of a protected network to scrubbed traffic, so that the scrubbed traffic can be directed to the router at the upstream of the protected network by using the SRv6 SID. In the manner, each hop of router through which an injection link passes can forward scrubbed traffic based on IPv6, and each hop of router through which the injection link passes does not need to be upgraded. Therefore, implementation complexity is reduced.

## Description

This application claims priority to Chinese Patent Application No. 202210314660.1, filed on March 28, 2022 and entitled "TRAFFIC INJECTION METHOD AND PROTECTION SYSTEM", which is incorporated herein by reference in its entirety.

### TECHNICAL FIELD

This application relates to the field of network security, and in particular, to a traffic injection method and a protection system.

### BACKGROUND

There are usually three processes: traffic diversion, scrubbing, and injection, in network attack and defense scenarios. The traffic diversion means that traffic sent from an external network to a protected network is directed to a protection system through an original path. The scrubbing means that after receiving traffic obtained by the traffic diversion, the protection system removes threatening traffic, and remains normal service traffic. The injection means that scrubbed traffic in the protection system returns to the original path, so that the scrubbed traffic is sent to the protected network.

In the three processes: the traffic diversion, the scrubbing, and the injection, this specification mainly focuses on the injection process, that is, how to return scrubbed traffic in the protection system to a path to the protected network.

Currently, there are many methods for implementing the injection. Frequently-used injection methods are, for example, layer-2 injection, static route injection, user network route (user network route, UNR) injection, policy route injection, generic routing encapsulation (generic routing encapsulation, GRE) based injection, and multi-protocol label switching (multi-protocol label switching, MPLS) based injection. The following analyzes and describes an MPLS based injection manner.

In the MPLS based injection, the protection system establishes a label switched path (label switched path, LSP) with a router at an upstream of the protected network. After the protection system obtains the scrubbed traffic, the protection system adds an MPLS label to each packet in the scrubbed traffic, and sends the packet including the MPLS label, so that the scrubbed traffic is forwarded to the router at the upstream of the protected network based on the LSP, and is sent to the protected network by the router after the MPLS label pops up from the scrubbed traffic.

The LSP is a term in an MPLS technology in a standard protocol, and is equivalent to a tunnel established by using the MPLS label. In an injection scenario, the LSP is an injection link between the protection system and the router at the upstream of the protected network. An ingress node on the LSP is the protection system, and an egress node on the LSP is the router at the upstream of the protected network. The LSP is a unidirectional path, and a direction of the path is the same as a direction of traffic injection. When receiving a packet, each hop of router through which the LSP passes needs to identify the MPLS label, and forwards the packet to a next-hop router after performing a label switching operation based on the MPLS label, until the scrubbed traffic is forwarded to the router at the upstream of the protected network.

According to the MPLS based injection method described above, each hop of router on the injection link needs to support MPLS label forwarding, that is, a higher requirement on a router in networking is posed, causing high implementation complexity.

### SUMMARY

This application provides a traffic injection method and a protection system, to provide a new traffic injection manner when each hop of router on an injection link does not need to be upgraded for support. The technical solutions are described as follows:

According to a first aspect, a traffic injection method is provided. The method includes: A protection system receives to-be-scrubbed traffic from a first router, where the protection system is deployed on the first router in a bypass mode, and the to-be-scrubbed traffic is traffic sent from an external network to a protected network. The protection system scrubs the to-be-scrubbed traffic, to obtain scrubbed traffic. For a first packet included in the scrubbed traffic, the protection system obtains a second packet based on the first packet, where the second packet is a segment routing over internet protocol version 6 (segment routing over internet protocol version 6, SRv6) packet, the second packet includes an SRv6 segment identifier (segment ID, SID) of a second router, the SRv6 SID of the second router is an internet protocol version 6 (internet protocol version 6, IPv6) address of the second router, the second router and the first router are connected through an IPv6 network, and the second router is deployed between the IPv6 network and the protected network. The protection system sends the second packet to the second router.

In the SRv6 field, the SRv6 SID is an IPv6 address in terms of technical essence. A format of an SRv6 packet is still the same as that of an IPv6 packet. Therefore, an SRv6 technology has a feature of native IPv6. In other words, a device supports IPv6, to be specific, can identify and forward the SRv6 packet, and not devices at all hops on a path are required to support SRv6.

In the method provided in the first aspect, the protection system adds an SRv6 SID of a router at an upstream of the protected network to the scrubbed traffic, so that the scrubbed traffic can be directed to the router at the upstream of the protected network by using the SRv6 SID. Therefore, an SRv6 based traffic injection manner is provided. According to the method, SRv6 based injection inherits natural advantages of the SRv6 technology to some extent. Each hop of router through which an injection link passes can forward scrubbed traffic based on IPv6, and each hop of router through which the injection link passes does not need to be upgraded to support SRv6. Therefore, implementation complexity is reduced to some extent.

In some implementations, that the protection system obtains the second packet based on the first packet includes: The protection system adds an IPv6 basic header to an outer layer of the first packet, to obtain the second packet, where a destination address field of the IPv6 basic header carries an SRv6 SID of a downstream node of the first router on a first injection link, an ingress node on the first injection link is the protection system, and an egress node on the first injection link is the second router.

In the foregoing implementation, the IPv6 basic header at the outer layer of the scrubbed traffic does not carry an actual destination IP address (namely, an IP address of a protection object in the protected network), but carries the SRv6 SID of the downstream node of the injection router. Therefore, after the first router receives the scrubbed traffic, when the first router searches a routing and forwarding table based on a destination address in the IPv6 basic header at the outer layer of the scrubbed traffic, the first router queries the routing and forwarding table based on the IPv6 address of the downstream node of the first router, to send the scrubbed traffic to the downstream node, so as to avoid a routing loop caused by matching a traffic diversion route based on an actual destination IP.

In some implementations, the downstream node is the second router; or
the downstream node is a transit node between the protection system and the second router.

In the foregoing implementation, in an SRv6 BE operating mode, the protection system can avoid the routing loop by encapsulating an SRv6 SID of an egress node. In an SRv6 TE operating mode, the protection system can avoid the routing loop by encapsulating an SRv6 SID of the transit node in downstream of the first router. Therefore, this technical solution can avoid the routing loop when the two typical SRv6 operating modes are applied, and is applicable to more scenarios.

In some implementations, if the first packet is an IPv6 packet, that the protection system obtains the second packet based on the first packet includes:

The protection system updates content of a destination address field of an IPv6 basic header of the first packet to the SRv6 SID of the second router, to obtain the second packet.

In the foregoing implementation, in a scenario in which an original packet itself is an IPv6 packet, a problem of the routing loop is solved. In addition, the protection system is not required to add an IPv6 header, and an IPv6 header of the original packet can be reused, to reduce overheads and improve flexibility.

In some implementations, the second packet includes an IPv6 extension header, the IPv6 extension header includes content that is written by the protection system and that exists in the destination address field of the IPv6 basic header of the first packet before the updating, and the IPv6 extension header is a segment routing header SRH or a destination options header.

In the foregoing implementation, the protection system can carry a destination IP of the original packet by using an SRH in the SRv6 technology, or when the original packet carries a DOH (destination options header), carry the destination IP of the original packet to the egress node (the second router) on the injection link by using the DOH in an IPv6 protocol, so that the egress node on the injection link can obtain an original destination IP, the scrubbed traffic can be routed and forwarded to the destination host in the protected network, and flexibility is improved.

In some implementations, the method further includes:

The protection system adds an SRH to the first packet, to obtain the second packet. The SRH includes a first segment list segment list, and the first segment list includes the SRv6 SID of the second router and an SRv6 SID of at least one transit node through which the first injection link passes. The ingress node on the first injection link is the protection system, and the egress node on the first injection link is the second router.

In the foregoing implementation, the scrubbed traffic is encapsulated with the segment list, where the segment list includes not only the SRv6 SID of the egress node (the second router) on the injection link, but also the SRv6 SID of the transit node. This is equivalent to explicitly specifying a part or all of transit nodes through which the injection link needs to pass in the scrubbed traffic, in other words, a specific constraint is imposed on the injection link. This helps meet a requirement of a user-defined injection link.

In some implementations, that the protection system adds the SRH to the first packet includes: The protection system adds the SRH to the outer layer of the first packet. Alternatively, the protection system inserts the SRH into an inner layer of the IPv6 basic header of the first packet.

In the foregoing implementation, two SRv6 encapsulation modes, namely, inserting and encapsulation, are supported, to improve flexibility.

In some implementations, a first injection link and a second injection link exist between the protection system and the second router, and before the protection system adds the SRH to the first packet, the method further includes: The protection system selects the first segment list from the first segment list and a second segment list based on quality of the first injection link and quality of the second injection link. The first segment list represents the first injection link, and the second segment list represents the second injection link. The quality of the first injection link is higher than the quality of the second injection link, and the quality of the first injection link or the quality of the second injection link is determined based on at least one of congestion, a delay, a packet loss rate, bandwidth, or overheads.

In the foregoing implementation, when there are a plurality of traffic injection links, the protection system can automatically select the injection link based on a requirement. For example, if one injection link is congested, a segment list of another injection link is selected for injection, to reduce impact of network congestion on the injection. For another example, if bandwidth usage of one injection link is low and the injection link is idle currently, a segment list of the injection link is selected for injection, to improve the bandwidth usage.

In some implementations, before the protection system adds the SRH to the first packet, the method further includes: The protection system sends topology information of the IPv6 network to a controller. The protection system receives the first segment list from the controller, where the first segment list is determined by the controller based on the topology information of the IPv6 network.

In the foregoing implementation, the controller determines the segment list based on the topology information of the IPv6 network that the injection link traverses. This better matches an architecture of an SRv6 TE policy. Therefore, a mechanism of the SRv6 TE policy can be reused, to reduce implementation complexity.

In some implementations, the SRv6 SID of the second router includes locating information and function information, where the locating information indicates a location of the second router, and the function information indicates the second router to perform SRv6 decapsulation.

In the foregoing implementation, the second router can be automatically triggered to restore a format of the second packet from an SRv6 packet to an original packet, to reduce a configuration workload of the second router.

In some implementations, the protection system receives an advertisement packet from the second router, where the advertisement packet is for advertising the SRv6 SID of the second router.

In the foregoing implementation, an existing route advertisement process can be used to automatically transfer, to the protection system, the SRv6 SID of the router through which the injection link passes, to reduce the implementation complexity.

According to a second aspect, a traffic injection method is provided. The method includes:

A router receives a second packet from a protection system, where the router is deployed between an IPv6 network and a protected network, the second packet includes an SRv6 SID of the router, and the SRv6 SID of the router is an IPv6 address of the router. The router obtains a first packet based on the second packet. The router sends the first packet to the protected network.

In some implementations, that the router obtains a first packet based on the second packet includes: The router removes an IPv6 basic header from an outer layer of the second packet, to obtain the first packet.

In some implementations, that the router obtains the first packet based on the second packet includes:

The router updates content of a destination address field of the IPv6 basic header of the second packet to an IP address of a protected object in the protected network, to obtain the first packet.

In some implementations, the second packet includes an IPv6 extension header, where the IPv6 extension header includes content that is written by the protection system and that exists in the destination address field of the IPv6 basic header of the first packet before the updating, and the IPv6 extension header is a segment routing header SRH or a destination options header. Before the router updates the content of the destination address field of the IPv6 basic header of the second packet to the IP address of the protected object in the protected network, the method further includes:

The router obtains the IP address of the protected object in the protected network from the IPv6 extension header included in the second packet.

In some implementations, the SRv6 SID of the second router includes locating information and function information, where the locating information indicates a location of the second router, and the function information indicates the second router to perform SRv6 decapsulation. That the router obtains the first packet based on the second packet includes: The router obtains the SRv6 SID of the second router from the second packet. The second router is indicated to perform SRv6 decapsulation in response to the function information in the SRv6 SID. The router performs SRv6 decapsulation on the second packet, to obtain the first packet.

In some implementations, the method further includes: The router generates an advertisement packet, where the advertisement packet is for advertising the SRv6 SID of the second router. The router sends the advertisement packet to the protection system.

According to a third aspect, a protection system is provided. The protection system has a function of implementing any one of the first aspect or the optional manners of the first aspect. The protection system includes at least one unit, and the at least one unit is configured to implement the method provided in any one of the first aspect or the optional manners of the first aspect.

In some embodiments, the unit in the protection system is implemented by using software, and the unit in the protection system is a program module. In some other embodiments, the unit in the protection system is implemented by using hardware or firmware. For specific details of the protection system provided in the third aspect, refer to any one of the first aspect or the optional manners of the first aspect. Details are not described herein again.

According to a fourth aspect, a router is provided. The router has a function of implementing any one of the second aspect or the optional manners of the second aspect. The router includes at least one unit, and the at least one unit is configured to implement the method provided in any one of the second aspect or the optional manners of the second aspect.

In some embodiments, the unit in the router is implemented by using software, and the unit in the router is a program module. In some other embodiments, the unit in the router is implemented by using hardware or firmware. For specific details of the router provided in the fourth aspect, refer to any one of the second aspect or the optional implementations of the second aspect. Details are not described herein again.

According to a fifth aspect, a protection system is provided. The protection system includes a processor and a network interface. The processor is coupled to a memory. The network interface is configured to receive or send a packet. The memory stores at least one computer program instruction, and the at least one computer program instruction is loaded and executed by the processor, so that the protection system performs the method provided in any one of the first aspect or the optional manners of the first aspect. For specific details of the protection system provided in the fifth aspect, refer to any one of the first aspect or the optional manners of the first aspect, details are not described herein again.

According to a sixth aspect, a router is provided. The router includes a processor and a network interface. The processor is coupled to a memory. The network interface is configured to receive or send a packet. The memory stores at least one computer program instruction, and the at least one computer program instruction is loaded and executed by the processor, so that the router performs the method provided in any one of the second aspect or the optional manners of the second aspect. For specific details of the router provided in the sixth aspect, refer to any one of the second aspect or the optional manners of the second aspect. Details are not described herein again.

According to a seventh aspect, a computer-readable storage medium is provided. The storage medium stores at least one instruction. When the instruction is run on a computer, the computer is enabled to perform the method provided in any one of the first aspect or the optional implementations of the first aspect.

According to an eighth aspect, a computer-readable storage medium is provided. The storage medium stores at least one instruction. When the instruction is run on a computer, the computer is enabled to perform the method provided in any one of to the second aspect or the optional implementations of the second aspect.

According to a ninth aspect, a computer program product is provided. The computer program product includes one or more computer program instructions. When the computer program instructions are loaded and run by a computer, the computer is enabled to perform the method provided in any one of the first aspect or the optional implementations of the first aspect.

According to a tenth aspect, a computer program product is provided. The computer program product includes one or more computer program instructions. When the computer program instructions are loaded and run by a computer, the computer is enabled to perform the method provided in any one of the second aspect or the optional implementations of the second aspect.

According to an eleventh aspect, a chip is provided, including a memory and a processor. The memory is configured to store computer instructions. The processor is configured to invoke the computer instructions from the memory and run the computer instructions, to perform the method in any one of the first aspect or the possible implementations of the first aspect.

According to a twelfth aspect, a chip is provided, including a memory and a processor. The memory is configured to store computer instructions. The processor is configured to invoke the computer instructions from the memory and run the computer instructions, to perform the method provided in any one of the second aspect or the optional implementations of the second aspect.

According to a thirteenth aspect, a network system is provided. The network system includes the protection system in the third aspect and the router according to the fourth aspect.

According to a fourteenth aspect, a network system is provided. The network system includes the protection system in the fifth aspect and the router in the sixth aspect.

### BRIEF DESCRIPTION OF DRAWINGS

FIG. 1 is a schematic diagram of a structure of an SRv6 SID according to an embodiment of this application;
FIG. 2 is a schematic diagram of a format of an SRH according to an embodiment of this application;
FIG. 3 is a schematic diagram of comparison between an encapsulation format of an SRv6 BE packet and an encapsulation format of an SRv6 TE policy packet according to an embodiment of this application;
FIG. 4 is a schematic diagram of an application scenario of a traffic scrubbing solution according to an embodiment of this application;
FIG. 5 is a schematic diagram of an application scenario of a traffic scrubbing solution according to an embodiment of this application;
FIG. 6 is a schematic diagram of an application scenario of a traffic scrubbing solution according to an embodiment of this application;
FIG. 7 is a flowchart of a traffic injection method according to an embodiment of this application;
FIG. 8 is a flowchart of SRv6 based packet injection processing according to an embodiment of this application;
FIG. 9 is a schematic diagram of an encapsulation format of an SRv6 packet according to an embodiment of this application;
FIG. 10 is a flowchart of SRv6 based packet injection processing according to an embodiment of this application;
FIG. 11 is a schematic diagram of an encapsulation format of an SRv6 packet according to an embodiment of this application;
FIG. 12 is a schematic diagram of an encapsulation format of an SRv6 packet according to an embodiment of this application;
FIG. 13 is a schematic diagram of a structure of a protection system 800 according to an embodiment of this application; and
FIG. 14 is a schematic diagram of a structure of a protection system 900 according to an embodiment of this application.

### DESCRIPTION OF EMBODIMENTS

It is found by the inventor of this application that various conventional injection manners have limitations to some extent.

For multi-protocol label switching (multi-protocol label switching, MPLS) based injection, because of a manner in which a label is inserted into an internet protocol (internet protocol, IP) packet header in MPLS, a packet loses universality of an IP technology, and each router through which an injection link passes is required to support forwarding based on an MPLS label. If any router through which the injection link passes does not support the forwarding based on the MPLS label, a software version of the router needs to be upgraded. In addition, a network administrator needs to perform MPLS related configuration on each router through which the injection link passes. In this case, an operation is complex, deployment efficiency is low, and deployment time is long. As a result, a provisioning speed of an injection service is affected.

For generic routing encapsulation (generic routing encapsulation, GRE) based injection, in a GRE based injection manner, each hop of transit node through which an injection link passes selects a shortest path based on a path computation result obtained by using an interior gateway protocol (interior gateway protocol, IGP), to forward scrubbed traffic, and cannot support setting nodes or links through which specified traffic passes, that is, does not support traffic engineering. Therefore, it is difficult to perform injection based on a customized path. In addition, such a path selection manner may cause congestion because the scrubbed traffic is concentrated on the shortest path and other optional links are idle. As a result, injection efficiency is affected.

In view of this, in some embodiments provided in this application, a method for scrubbing attack traffic for injection by using a segment routing over internet protocol version 6 (segment routing over internet protocol version 6, SRv6) technology is provided. The method provided in embodiments inherits advantages of native (native) internet protocol version 6 (internet protocol version 6, IPv6) in the SRv6 technology. Scrubbed traffic can be transmitted to an egress node on an injection link based on IPv6 reachability, and each router on the traffic injection link is not required to support SRv6 based forwarding. In addition, a network administrator performs SRv6 related configuration on a protection device that serves as an ingress node on the injection link and the egress node through which the injection link passes, and then deploys an injection service based on SRv6. The network administrator does not need to perform SRv6 related configuration on each transit node through which the injection link passes. In this case, deployment efficiency is improved, deployment time is shortened, and the injection service is quickly provisioned. In addition, in some embodiments provided in this application, source routing and a capability of programming a path in the SRv6 technology are used to support injection based on a customized path, to help relieve congestion.

The following explains and describes some terms and concepts in the SRv6 technology, to help a reader understand the technical solutions. Explanations of the terms and the concepts provided below are generally applicable to embodiments described below.

### (1) SRv6 segment identifier (segment ID, SID)

The SRv6 SID is an identifier an SRv6 segment. A form of the SRv6 SID is an IPv6 address with 128 bits. A main difference between the SRv6 SID and a common IPv6 address lies in the following: The common IPv6 address can be generally used only for routing and forwarding. However, the SRv6 SID not only can be used for routing and forwarding, but also can represent a processing behavior of a device or identify a service. This is equivalent to integrate capabilities in terms of routing and a service. How such a function is implemented by using the SRv6 SID depends on a structure of the SRv6 SID.

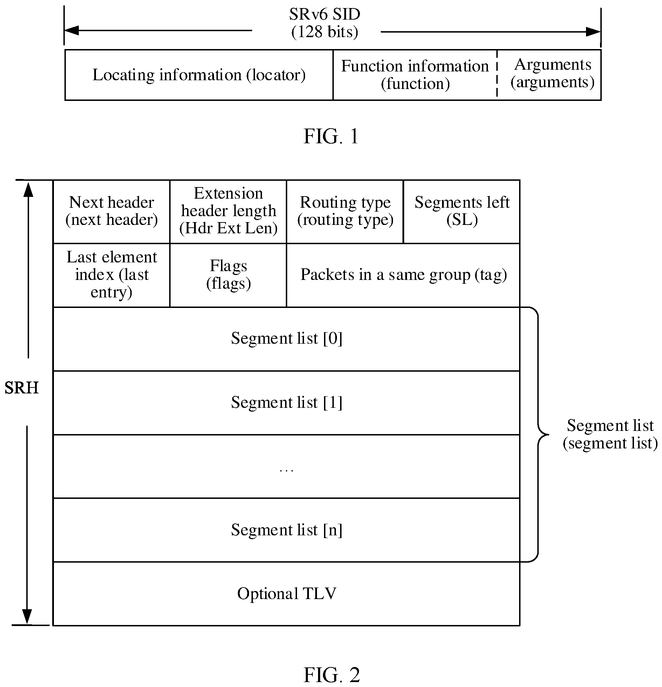

As shown in FIG. 1, the SRv6 SID mainly includes two parts, namely, a locator (locating information) and a function (function information). A high bit of the SRv6 SID indicates the locator. A low bit of the SRv6 SID indicates the function.

The locator has a locating function. The locator is equivalent to an IPv6 address prefix. After the locator is configured on a device A, the device A generates a locator network segment route, and advertises the locator network segment route in an SRv6 domain by using IGP. After receiving the locator network segment route advertised by the device A, another device in the SRv6 domain stores the locator network segment route into a local routing and forwarding table, so that the device A can be located through the locator network segment route. In addition, usually, all SRv6 SIDs advertised by the device A can reach the device A through the locator network segment route.

The function indicates an instruction (instruction) of a device, and the function indicates a node that generates the SRv6 SID to perform a corresponding function operation.

In addition, the function is optionally divided into a arguments (arguments) part, and arguments define flow and service information of a packet.

In each component of the SRv6 SID, the function and the arguments can be customized. Therefore, the structure of the SRv6 SID is more advantageous to network programming.

Currently, there are mainly two types of SRv6 SIDs: a path SID and a service SID. The path SID is, for example, an End SID or an End.X SID. The service SID is, for example, an End.DT4 SID, an End.DT6 SID, an End.DX4 SID, or an End.DX6 SID.

### (2) End SID

The End SID represents an endpoint SID (Endpoint SID), and identifies a destination node (node) in a network. An action (function) corresponding to the End SID is to update an IPv6 destination address (destination address, DA) and search an IPv6 forwarding table for packet forwarding.

### (3) End.X SID

The End.X SID represents a layer 3 cross-connect endpoint SID, and identifies a link in the network. An action corresponding to the End.X SID is to update an IPv6 destination address and forward a packet through an outbound interface bound to the End.X SID.

### (4) End.DT4 SID

The End.DT4 SID represents an endpoint SID of a network-side edge (provider edge, PE) type, and identifies an internet protocol version 4 (internet protocol version 4, IPv4) virtual private network (virtual private network, VPN) instance in the network. A forwarding action corresponding to the End.DT4 SID is to decapsulate a packet and search a routing table of the IPv4 VPN instance for forwarding.

### (5) End.DT6 SID

The End.DT6 SID represents an endpoint SID of the PE type, and identifies an IPv6 VPN instance in the network. A forwarding action corresponding to the End.DT6 SID is to decapsulate a packet and search a routing table of the IPv6 VPN instance for forwarding.

### (6) End.DX4 SID

The End.DX4 SID represents a layer 3 cross-connect endpoint SID of the PE type, and identifies an IPv4 customer edge (Customer Edge, CE) device in the network. A forwarding action corresponding to the End.DX4 SID is to decapsulate a packet and forward a decapsulated IPv4 packet through a layer 3 interface bound to the SID.

### (7) End.DX6 SID

The End.DX6 SID represents a layer 3 cross-connect endpoint SID of the PE type, and identifies an IPv6 CE device in the network. A forwarding action corresponding to the End.DX6 SID is to decapsulate a packet and forward a decapsulated IPv6 packet through a layer 3 interface bound to the SID.

### (8) Segment list (segment list)

The segment list is a series of SRv6 SIDs, and indicates an IPv6 forwarding path. The segment list is usually carried in an SRH.

### (9) Segment routing header (segment routing header, SRH)

The SRH is an IPv6 routing extension packet header (routing header, RH), and a main function of the SRH is to carry a segment list. An ingress node adds one SRH to a packet, to indicate a transit node to forward the packet based on a segment list in the SRH.

FIG. 2 shows a format of the SRH. The SRH mainly includes a segment list, a routing type (routing type) field, and a segments left (segments left, SL) field.

The SRH in FIG. 2 may be simplified as (segment list [0], segment list [1], segment list [2], ..., and segment list [n]). Usually, the segment list [0] is the 1^{st} to-be-processed SID in the segment list, the segment list [1] is the 2^{nd} to-be-processed SID in the segment list, and the segment list [n] is the last to-be-processed SID in the segment list.

In this specification, for ease of understanding, the technical solutions are described by using an example in which SIDs are sorted in a positive sequence in schematic diagrams of packets. Optionally, the SIDs in the packet are sorted in a reverse sequence, in other words, from an ingress node, each hop of node through which a path passes performs a reverse-sequence operation on a segment list from bottom to top. This is different from a processing sequence of labels in a label stack in MPLS. Certainly, this specification limits neither whether SIDs in a segment list in an SRH are arranged in a positive sequence, in a reverse sequence, or in another sequence nor a processing sequence of each hop of node through which a path passes for each SID in the segment list.

The routing type field identifies a type of the IPv6 RH. If a value of the routing type field is 4, it indicates that a packet header is an SRH.

The SL field functions as a pointer, and indicates a current active segment. A minimum value of the SL field is 0, and a maximum value of the SL field is equal to a quantity of SIDs in the SRH minus 1.

For details about the IPv6 routing extension packet header, a reader may further refer to RFC 8200. For a detailed definition of the SRH, the reader may further refer to draft-ietf-6man-segment-routing-header-26.

### (10) Processing process of an SRH

In an SRv6 SRH, SL and segment list information together determine an IPv6 destination address in a packet header. In SRv6, each time an SRv6 node is passed through, an SL field is decreased by 1, and the IPv6 DA (Destination Address, destination address) changes once, where a value of the IPv6 DA is an SID to which a pointer currently points. SL and segment list fields together determine the IPv6 DA.

If a value of the SL is n, the value of the IPv6 DA is a value of an SID [0]. If a value of the SL is n-1, the value of the IPv6 DA is a value of an SID [1]. If a value of the SL is 1, the value of the IPv6 DA is a value of an SID [n-1]. If a value of the SL is 0, the value of the IPv6 DA is a value of an SID [n].

In summary, when processing an SRv6 packet, a forwarding behavior performed by an SRv6 transit node (midpoint) is to decrease the SL by 1 and copy a next SID to a destination address field into an IPv6 packet header.

In addition, if the transit node through which the SRv6 packet passes does not support SRv6, the node that does not support SRv6 does not need to perform the foregoing action. Instead, the node searches an IPv6 routing table based on an IPv6 DA (namely, an SRv6 SID) and forwards the packet based on a longest match manner.

There are two implementations of adding an SRH to a packet: an encapsulation mode and an insert mode.

### (11) Encapsulation (encapsulation) mode

The encapsulation mode means that an IPv6 basic header and an SRH are inserted into an outer layer of an original service packet. The encapsulation mode is applicable to a case in which the original service packet is an IPv4 packet, an IPv6 packet, or an ethernet (ethernet) packet. For the encapsulation mode, refer to descriptions in RFC 8986.

### (12) Insert (insert) mode

The insert mode means that an SRH is added to an inner layer of an IPv6 basic header of an original service packet. This is equivalent to reusing the IPv6 basic header of the original service packet without adding an IPv6 basic header. The insert mode is applicable to a case in which the original service packet is an IPv6 packet. For example, the original service packet is a user datagram protocol (user datagram protocol, UDP) packet, and a form of the original service packet is the IPv6 basic header+the UDP packet. An SRH is inserted between the IPv6 basic header and the UDP packet, to generate an SRv6 packet, and a form of the generated SRv6 packet is the IPv6 basic header+the SRH+the UDP packet.

In addition, if the original service packet includes one or more IPv6 extension headers encapsulated into the inner layer of the IPv6 basic header and an outer layer of a payload, optionally, an SRH is inserted between a plurality of IPv6 extension headers included in the original service packet, or an SRH is inserted at an end of all IPv6 extension headers included in the original service packet. For the insert mode, refer to descriptions in an earlier draft version of RFC 8986 and draft-fil S 7 ils- spring -srv6- net - pgm- insertion-04.

### (13) SRv6 traffic engineering (traffic engineering, TE) policy (policy)

The SRv6 TE policy is an operating mode of SRv6. When an SRv6 TE policy mode is used, an ingress node adds an SRH to the packet. The SRH includes a segment list, and the segment list indicates a packet to be forwarded based on a planned path. Therefore, the path can be programmed. Usually, a controller delivers the segment list in the SRv6 TE policy to an ingress node.

### (14) SRv6 best effort (best effort, BE)

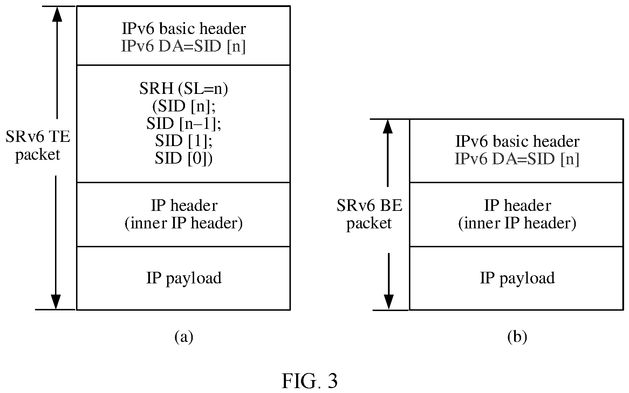

The SRv6 BE is another operating mode of SRv6. A main difference between the SRv6 BE and the SRv6 TE policy lies in that, when the SRv6 BE mode is used, a packet usually does not include an SRH, and uses only one SID (namely, an SID carried in an IPv6 DA field) to direct the packet to be forwarded with best effort. FIG. 3 is a schematic diagram of comparison between an encapsulation format of an SRv6 BE packet and an encapsulation format of an SRv6 TE policy packet. (a) in FIG. 3 shows the encapsulation format of the SRv6 TE policy packet, and (b) in FIG. 3 shows the encapsulation format of the SRv6 BE packet. A main difference between SRv6 BE and common IPv6 lies in that a destination address field of a common IPv6 packet represents a host or a network segment, and a destination address of the SRv6 BE packet is an SRv6 SID. The SRv6 SID is for directing the packet to be forwarded, based on a shortest path, to a node that generates the SID, and the node executes an instruction in the SID.

The foregoing describes some terms and concepts in the SRv6 technology, and the following describes why the SRv6 technology can implement three features, namely, native IPv6, source routing, and path programmability, to help a reader understand the technical solutions.

For native IPv6, forwarding is guided based on an SRv6 SID in SRv6, and a form of the SRv6 SID is an IPv6 address. Even if a transit node does not support SRv6, an IPv6 routing table can also be searched based on the SRv6 SID in a longest match manner, to forward a packet. In addition, even if an SRH is inserted into the packet, because the SRH is an extension of an RH packet header in IPv6, the packet including the SRH is still an IPv6 packet, without losing an encapsulation structure of the IPv6 packet. Therefore, the SRv6 has the feature of native IPv6 and supports joint networking of an SRv6 device and a common IPv6 device. This achieves good compatibility to an existing network.

For the source routing, the source routing means that a source end of a packet determines a transmission path of the packet in a network. This is essentially different from a conventional routing and forwarding technology in which each router selects a shortest route. For a definition of the concept of source routing, a reader may also refer to the paper *"*Source Routing In Computer Networks" published by Carl A. Sunshine in 1977. In a source routing (segment routing, SR) technology, a forwarding path of a packet is divided into different segments (segments). An ingress node on an SR path inserts an SID into the packet, and a transit node through which the SR path passes forwards the packet based on the SID. This method is equivalent to specifying a path at the ingress node, to implement the source routing.

The path programmability means that a node or a link through which a forwarding path of specified traffic passes, for example, each hop of node through which the specified traffic passes, is supported (for example, by using software) (where this manner is also referred to as strict source routing), or a part of nodes through which specified traffic passes are supported, and remaining nodes are selected by a router based on a shortest route (where this manner is also referred to loose source routing). In the SRv6 technology, two types of SRv6 SIDs, namely, an End SID and an End.X SID, are provided. The End SID identifies a destination node in a network, and the End.X SID identifies a link in the network. Usually, a segment list generated by orchestrating the End SID and the End.X SID is sufficient to represent any network path. Therefore, the path programmability is implemented. In addition, Linux version 4.10 starts to support SRv6, and Linux version 4.14 starts to support most functions of SRv6 functions, so that a difficulty of SRv6 path programming is reduced.

The foregoing describes some related content in the SRv6 technology, and the following describes a relationship between the SRv6 technology and an application scenario of this application.

Some embodiments of this application are applied to a scenario in which attack traffic is scrubbed for injection. An injection link is established based on the SRv6 technology, in other words, the injection link is an SRv6 path. A start point on the injection link, namely, a protection device, is an ingress node on the path in the SRv6 technology. An endpoint on the injection link, namely, a router at an upstream of a protected network, is an egress node on the path in the SRv6 technology. A process of forwarding scrubbed traffic from the protection device to the protected network along the injection link is equivalent to a process of forwarding an SRv6 packet from the ingress node to the egress node. A manner in which each router through which the injection link passes forwards the scrubbed traffic is similar to a manner in which each hop of node forwards an SRv6 packet in the SRv6 technology.

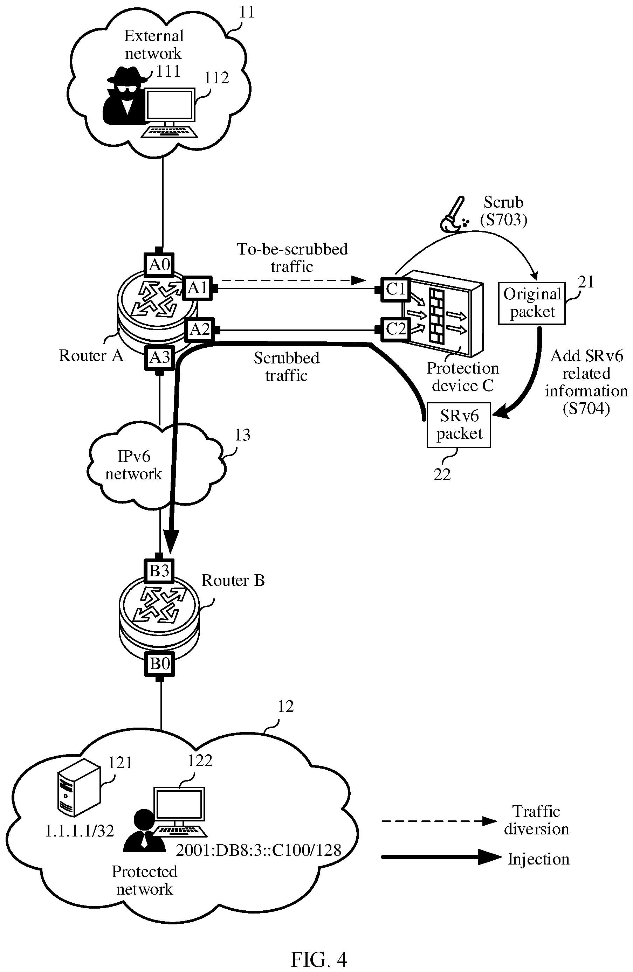

The following describes the application scenario in embodiments of this application with reference to FIG. 4 to FIG. 6.

FIG. 4 shows an application scenario of a traffic scrubbing solution according to an embodiment of this application.

The following first describes the scenario shown in FIG. 4 as a whole, and then separately describes devices in the scenario.

FIG. 4 provides a scenario in which a protection device is deployed in a bypass mode. The scenario shown in FIG. 4 is used to defend against a network attack from an external network 11 on a protected network 12, to protect network security of the protected network 12.

From a perspective of an attack type, the traffic scrubbing solution shown in FIG. 4 is applicable to defense against various network attacks, such as a distributed denial-of-service attack (distributed denial-of-service attack, DDoS), a command and control (Command and Control, C&C) attack, and a web page backdoor attack. A DDoS is used as an example. The DDoS attack means that an attacker controls a large quantity of attacker hosts (for example, zombie hosts in a botnet) to send intensive traffic data to an attack target. As a result, a system resource of the attack target is exhausted, and the attack target cannot respond to a normal service request. With reference to the scenario shown in FIG. 4, for example, there are an attacker 111 and an attacker host 112 in the external network 11 in FIG. 4, and a server 121 in the protected network 12 is an attack target of the attacker 111. The attacker 111 controls the attacker host 112 to initiate DDoS attack traffic whose destination IP address of 1.1.1.1. A router A uses the traffic whose destination IP address is 1.1.1.1 as to-be-scrubbed traffic, and diverts the traffic to a protection device C. The protection device C filters out a DDoS attack packet from the to-be-scrubbed traffic, and a remaining normal service packet is injected to the server 121 as scrubbed traffic, to reduce impact of the DDoS attack on the server 121.

From a perspective of an overall deployment location, in an example scenario, FIG. 4 shows a scenario of defending against an attack from the Internet on an enterprise network. For example, in FIG. 4, the external network 11 is an internet, and the protected network 12 is the enterprise network. Networking shown in FIG. 4 is for scrubbing attack traffic that enters from the internet, to ensure security of the enterprise network. In another example scenario, FIG. 4 is applied to defense against an attack from an external metropolitan area network on a local metropolitan area network. For example, in FIG. 4, the external network 11 is a metropolitan area network A, and the protected network 12 is a metropolitan area network B. Networking shown in FIG. 4 is for scrubbing attack traffic that enters from the metropolitan area network A, to protect security of the metropolitan area network B. In still another example scenario, FIG. 4 is applied to protect security of an internet data center (internet data center, IDC), and the protected network 12 in FIG. 4 is the IDC.

The router A, a router B, and the protection device C are deployed in the scenario shown in FIG. 4. A protected object of the protection device C is deployed in the protected network 12, and the protected object is, for example, the server 121 or a client 122.

The following describes the router A, the router B, and the protection device C from a plurality of perspectives such as a location, a function, a connection relationship, and a product form.

### (1) Router A

From the perspective of the location, the router A is deployed between the external network 11 and an IPv6 network 13.

From the perspective of the function, the router A is responsible for traffic diversion. The router A is also referred to as a traffic diversion router. For a basic concept of traffic diversion, refer to descriptions in the background part of this specification. With reference to the scenario shown in FIG. 4, a traffic diversion process includes: The router A sends, to the protection device C, to-be-scrubbed traffic that is from the external network 11 and whose destination address is an IP address of the projected object in the protected network 12.

For example, different interfaces of the router A have different functions. As shown in FIG. 4, the router A has an interface A0, an interface A1, an interface A2, and an interface A3. The interface A0 is configured to receive the to-be-scrubbed traffic from the external network 11. The interface A1 is connected to an interface C1 of the protection device C through a link. The interface A1 is configured to send the to-be-scrubbed traffic to the interface C1, so that the to-be-scrubbed traffic is transmitted from the router A to the protection device C. The interface A2 of the router A is connected to an interface C2 of the protection device C through a link. The interface A2 is configured to receive scrubbed traffic from the protection device C. The interface A3 is configured to send the scrubbed traffic to the IPv6 network 13.

In this specification, a specific interface is simply represented in a form of "device number+interface number". For example, "A0" represents an interface 0 on the router A, and "C1" represents an interface 1 on the protection device C. Optionally, the interface is a physical interface or a logical interface (for example, a tunnel interface).

From the perspective of the product form, a product form of the router A is not limited to a physical router. Alternatively, the router A is a layer 3 switch, a firewall, a server, or the like.

With regard to explanation of the term of the router, the "router" (router) in this specification generally refers to a device that performs routing and forwarding based on a destination IP address in a packet header. According to a definition of an IPv6 router in RFC 8504, if a device can forward a received IP packet to a device other than the device, the device may be understood as a router. A physical product form of the router in embodiments is not limited in this specification.

### (2) Protection device C

From the perspective of the location, the protection device C is deployed on the router A in a bypass mode. In other words, the protection device C is deployed in a bypass form.

From the perspective of the function, the protection device C is responsible for scrubbing and injection.

For a basic concept of scrubbing, refer to descriptions in the background part of this specification. The scrubbing is also referred to as filtering. The scrubbing includes discarding an attack packet and forwarding a non-attack packet. A function of discarding the attack packet is, for example, blocking attack traffic and preventing the attack traffic from entering the protected network 12. A function of forwarding the non-attack packet is, for example, to allow normal service traffic to be forwarded to the protected network 12. With reference to the scenario shown in FIG. 4, a scrubbing process is, for example, scrubbing, by the protection device C, traffic sent from the external network 11 to the protected network 12, to obtain scrubbed traffic.

For example, the injection is, for example, returning, by the protection device C, the scrubbed traffic to the protected network 12. In some embodiments of this application, the protection device C is configured to convert the scrubbed traffic into a series of SRv6 packets in a traffic injection process. For example, the protection device C is responsible for adding SRv6 related information, such as an SRv6 SID of the router B, to each packet in the scrubbed traffic, to generate an SRv6 packet, so as to support traffic injection to be performed in an SRv6 manner.

The protection device C is an ingress node on an injection link, and is also an ingress node on an SRv6 path. For example, different interfaces of the protection device C have different functions. As shown in FIG. 4, the protection device C has the interface C1 and the interface C2. The interface C1 is configured to receive to-be-scrubbed traffic from the router A. The interface C2 is configured to send scrubbed traffic to the router A.

From the perspective of the product form, the protection device C includes but is not limited to one or integration of more of a firewall, a security gateway (such as a router or a switch), an intrusion detection system (intrusion detection system, IDS) device, an intrusion prevention system (intrusion prevention system, IPS) device, a unified threat management (unified threat management, UTM) device, an anti-virus (anti-virus, AV) device, an anti-distributed denial-of-service attack (distributed denial-of-service attack, DDoS) (anti-DDoS) device, a next-generation firewall (Next-generation firewall, NGFW), and a deep packet inspection (Deep packet inspection, DPI) device.

### (3) Router B

From the perspective of the location, the router B is deployed between the IPv6 network 13 and the protected network 12.

From the perspective of the function, the router B is responsible for sending scrubbed traffic to the protected network 12. In some embodiments of this application, the router B supports SRv6, and the router B is responsible for forwarding the scrubbed traffic to the protected network 12 based on an SRv6 SID. The router B has an interface B3 and an interface B0. The interface B3 is configured to receive the scrubbed traffic from the IPv6 network 13. The interface B0 is configured to send the scrubbed traffic to the protected network 12.

A product form of the router B is similar to that of the router A. For details, refer to descriptions of the product form of the router A.

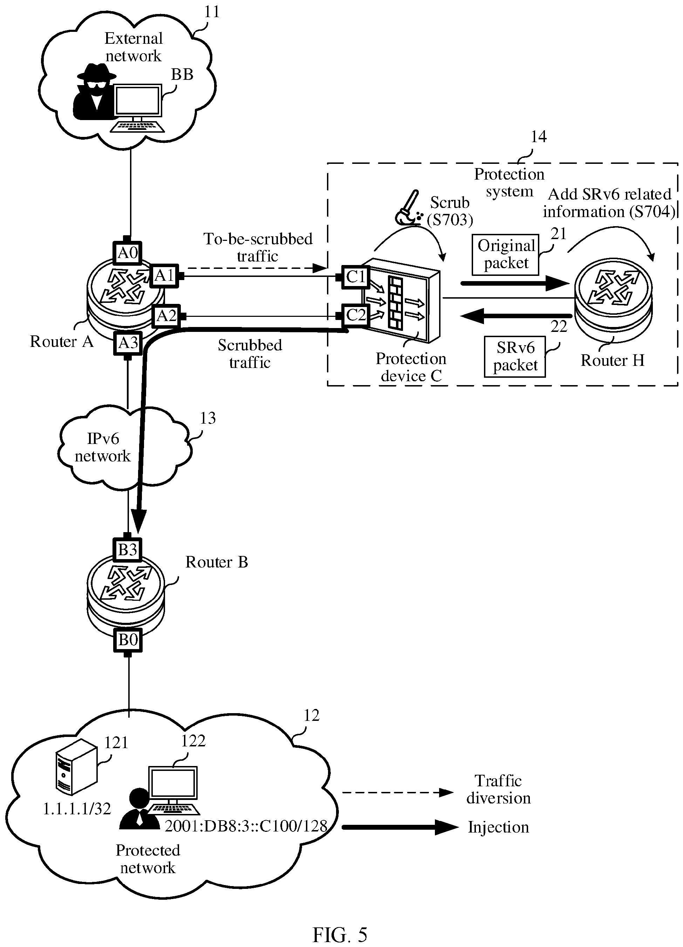

The scenario shown in FIG. 4 is described by using an example in which two tasks, namely, traffic scrubbing and converting scrubbed traffic into a series of SRv6 packets, are performed on a same protection device. In another example scenario, two tasks, namely, traffic scrubbing and converting scrubbed traffic into a series of SRv6 packets are performed by different devices in a protection system in a collaborative manner. For example, refer to FIG. 5. A protection system 14 includes a protection device C and a router H. The protection device C is configured to scrub traffic, and the router H is configured to convert scrubbed traffic into a series of SRv6 packets. For example, the protection device C sends an original packet 21 in the scrubbed traffic to the router H. After converting the original packet 21 into an SRv6 packet 22, the router H sends the SRv6 packet 22 to the protection device C, and the protection device C injects the SRv6 packet 22.

The scenarios shown in FIG. 4 and FIG. 5 are described by using an example in which a traffic scrubbing task is executed by an independent protection device. In another example scenario, a traffic scrubbing task is executed by a plurality of protection devices. For example, the protection system is a cluster or a distributed system, and the protection system includes a plurality of protection devices. The plurality of protection devices jointly execute the traffic scrubbing task, and a function of each protection device is similar to that of the protection device C. For example, the plurality of protection devices in the protection system jointly execute the traffic scrubbing task in load balancing manner. For another example, a near-source scrubbing manner is used, and a protection device closest to the attacker host 112 in the protection system executes the traffic scrubbing task.

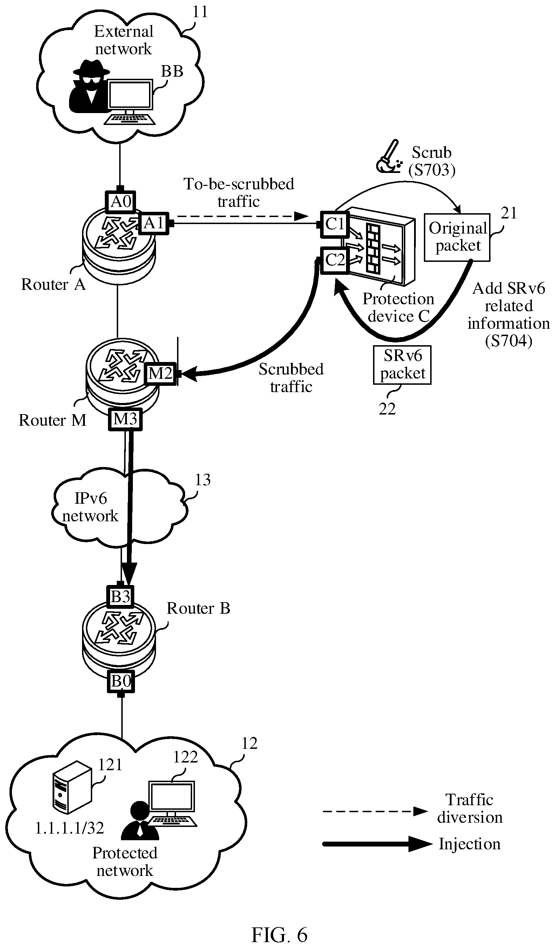

In the scenarios shown in FIG. 4 and FIG. 5, an example in which an injection router and a traffic diversion router are a same device (the router A) is used for description. In another example scenario, an injection router and a traffic diversion router are not a same device. For example, refer to FIG. 6. In a scenario shown in FIG. 6, a traffic diversion router is a router A, and an injection router is a router M. After receiving scrubbed traffic, a protection device C sends the scrubbed traffic to the router M. The router M receives the scrubbed traffic through an interface M2, and sends the scrubbed traffic to an IPv6 network 13 through an interface M3.

The scenario in which there are two protected objects in the protected network shown in FIG. 4 is an example for description. In another example scenario, for example, there are more or fewer protected objects in the protected network 12. For example, there is only one protected object in the protected network 12, or there are dozens of, hundreds of, or more protected objects in the protected network 12. In a scenario in which there are more protected objects in the protected network 12, the protection device C may optionally use a similar process to scrub and inject traffic to be sent to each protected object.

The foregoing describes the application scenario of this application by using an example, and the following describes a method process of this application by using an example.

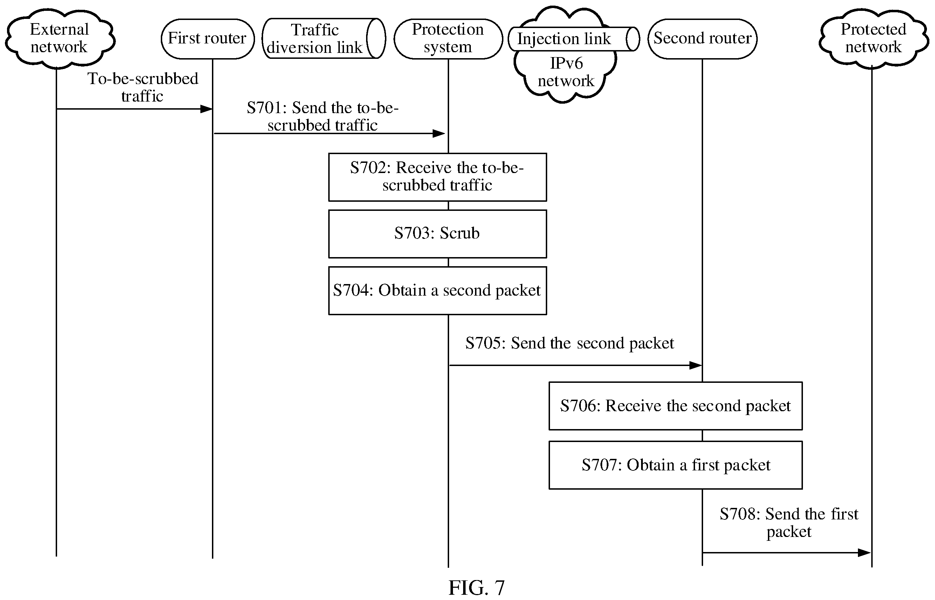

FIG. 7 shows a traffic injection method according to an embodiment of this application.

The method shown in FIG. 7 involves a traffic diversion router and a router that serves as an endpoint of an injection link. To distinguish between different routers, a "first router" is for describing the traffic diversion router, and a "second router" is for describing the router that serves as the endpoint on the injection link.

The method shown in FIG. 7 involves that, after converting a packet in scrubbed traffic into an SRv6 packet, a protection system sends the SRv6 packet to a protected network. To distinguish between and describe different packets, a "first packet" is for describing a packet included in the scrubbed traffic, and a "second packet" is for describing the SRv6 packet sent by the protection system.

The method shown in FIG. 7 is optionally used to inject each packet in the scrubbed traffic. For brevity and clarity of description, the method shown in FIG. 7 is described by using an example of how to inject a packet (the first packet) in the scrubbed traffic. For an injection process of other packets in the scrubbed traffic, refer to an injection process of the first packet.

In some implementations, a networking architecture on which the method shown in FIG. 7 is based is shown in FIG. 4. With reference to FIG. 4, the protection system in the method shown in FIG. 7 is, for example, the protection device C in FIG. 4. The first router in the method shown in FIG. 7 is, for example, the router A in FIG. 4. The second router in the method shown in FIG. 7 is, for example, the router B in FIG. 4. A traffic diversion link in the method shown in FIG. 7 is, for example, a link from the interface A1 to the interface C1 in FIG. 4. An injection link in the method shown in FIG. 7 is, for example, a link from the interface C2 to the interface B3 in FIG. 4. In addition, the first packet in the method shown in FIG. 7 is, for example, the original packet 21 in FIG. 4. The second packet in the method shown in FIG. 7 is, for example, the SRv6 packet 22 in FIG. 4, and a path through which the packet passes is, for example, A0→A1→C1→C2→A2→A3→B3→B0 in FIG. 4.

In some other implementations, a networking architecture on which the method shown in FIG. 7 is based is shown in FIG. 5. The protection system in the method shown in FIG. 7 is, for example, the protection system 14 in FIG. 4. A main difference between the implementation corresponding to FIG. 5 and the implementation corresponding to FIG. 4 lies in that, in a case of implementation based on the networking architecture shown in FIG. 4, step S703 and step S704 are performed by a same device in the protection system. For example, both step S703 and step S704 are performed by the protection device C in FIG. 4. However, in a case of implementation based on the networking architecture shown in FIG. 5, step S703 and step S704 are performed by different devices in the protection system in a collaborative manner. For example, step S703 is performed by the protection device C in FIG. 5, and step S704 is performed by the router H in FIG. 5.

As shown in FIG. 7, the method provided in this embodiment includes step S701 to step S708.

Step S701: The first router sends to-be-scrubbed traffic to the protection system.

The to-be-scrubbed traffic (traffic) is traffic sent from an external network to the protected network. In other words, a source host of the to-be-scrubbed traffic is located in the external network, and a destination host is located in the protected network. The to-be-scrubbed traffic is transmitted from the external network to the protected network.

For example, the to-be-scrubbed traffic includes a series of IP packets. The IP packet in the to-be-scrubbed traffic includes an IP basic header and an IP payload. A destination IP address in the IP basic header is an IP address of a protected object in the protected network.

The following uses two detailed scenarios as examples to describe the to-be-scrubbed traffic from a perspective of a protocol type. For details, refer to the following scenario 1 and scenario 2.

### Scenario 1: Scenario in which IPv4 traffic is scrubbed and injected

The to-be-scrubbed traffic is, for example, the IPv4 traffic, and the to-be-scrubbed traffic includes, for example, a series of IPv4 packets. For example, with reference to FIG. 4, the to-be-scrubbed traffic is traffic to be sent to the server 121 in FIG. 4, and a destination IP address of the to-be-scrubbed traffic is an IPv4 address 1.1.1.1 of the server 121.

### Scenario 2: Scenario in which IPv6 traffic is scrubbed and injected

The to-be-scrubbed traffic is, for example, the IPv6 traffic, and the to-be-scrubbed traffic includes, for example, a series of IPv6 packets. For example, with reference to FIG. 4, the to-be-scrubbed traffic in the method shown in FIG. 7 is traffic to be sent to the client 122 in FIG. 4, and a destination IP address of the to-be-scrubbed traffic is an IPv6 address 2001:DB8:3::C100 of the client 122.

The following uses two detailed scenarios as examples to describe the to-be-scrubbed traffic from a perspective of a traffic diversion manner. For details, refer to the following scenario A and scenario B.

### Scenario A: Static traffic diversion

The static traffic diversion means that all traffic destined for the protected network is sent, as the to-be-scrubbed traffic, to the protection system for scrubbing, regardless of whether an attack exists. When the static traffic diversion is used, the to-be-scrubbed traffic may include an attack packet, or may not include an attack packet.

### Scenario B: Dynamic traffic diversion

The dynamic traffic diversion means that if an attack is detected in traffic destined for the protected network, the traffic is sent, as the to-be-scrubbed traffic, to the protection system for scrubbing. When the dynamic traffic diversion is used, the to-be-scrubbed traffic usually includes an attack packet. Optionally, the first router detects whether an attack exists in the traffic destined for the protected network.

Step S702: The protection system receives the to-be-scrubbed traffic from the first router.

Step S703: The protection system scrubs the to-be-scrubbed traffic, to obtain scrubbed traffic.

Step S704: For the first packet included in the scrubbed traffic, the protection system obtains the second packet based on the first packet.

The second packet is an SRv6 packet. The second packet includes an SRv6 SID of the second router. Optionally, the second packet includes all content of the first packet, and the SRv6 SID of the second router in the second packet is added by the protection system.

A location at which the SRv6 SID of the second router is carried in the second packet includes a plurality of cases. For example, the second packet includes an IPv6 basic header, and content of a destination IP address field of the IPv6 basic header is the SRv6 SID of the second router. For another example, the second packet includes an SRH, the SRH includes a segment list, and the segment list includes the SRv6 SID of the second router. For example, refer to FIG. 3. When the protection system uses an SRv6 TE policy operating mode, the second packet has the format of the SRv6 TE packet shown in (a) in FIG. 3, and the SRH of the second packet includes the SRv6 SID of the second router. When the protection system uses an SRv6 BE operating mode, the second packet has a format of the SRv6 BE packet shown in (b) in FIG. 3, and the IPv6 basic header at an outer layer of the second packet includes the SRv6 SID of the second router.

The SRv6 SID of the second router is an IPv6 address of the second router. The SRv6 SID of the second router includes a locator and a function. The locator indicates a location of the second router. For example, the locator indicates a network segment to which the IPv6 address of the second router belongs. The function indicates an operation to be performed by the second router on the second packet.

In step S704, because the protection system adds the SRv6 SID to the packet when injecting the scrubbed traffic, a traffic diversion function is implemented, and the scrubbed traffic can be diverted to the endpoint on the injection link, so that the scrubbed traffic is returned to the protected network. For example, because the added SRv6 SID includes the locator of the second router, each hop of transit node through which the injection link passes can perform routing and forwarding based on the locator of the second router and a locally stored locator network segment route, or perform routing and forwarding based on the locator of the second router and a locally stored IPv6 route, to forward the scrubbed traffic to the second router hop by hop.

A type of the SRv6 SID that is of the second router and that is added by the protection system includes a plurality of cases. Optionally, the function in the SRv6 SID that is of the second router and that is added by the protection system indicates the second router to remove SRv6 related information, for example, decapsulate SRv6, for example, remove the SRH and the IPv6 basic header at the outer layer. For example, the SRv6 SID that is of the second router and that is added by the protection system includes but is not limited to an End.DT4 SID, an End.DT6 SID, an End.DX4 SID, or an End.DX6 SID of the second router. The protection system adds the foregoing type of SRv6 SID, so that the second router can be automatically triggered to restore a format of the second packet from an SRv6 packet to an original packet, to reduce a configuration workload of the second router.

Step S705: The protection system sends the second packet.

The protection system sends the second packet to a next-hop node of the protection system on the injection link, or a second-hop node through which the injection link passes.

For example, when the traffic diversion router and an injection router are a same router, the protection system sends the second packet to the first router. For example, with reference to the networking scenario shown in FIG. 4, the protection device C (an example of the protection system) sends the scrubbed traffic (including the second packet) to the router A (an example of the first router).

For another example, when the traffic diversion router and an injection router are not a same router, the protection system does not send the second packet to the first router, but sends the second packet to another downstream node on the injection link. For example, with reference to the networking scenario shown in FIG. 6, the protection device C (an example of the protection system) sends the scrubbed traffic (including the second packet) to the router M (an example of the downstream node on the injection link).

Step S706: The second router receives the second packet from the protection system.

Step S707: The second router obtains the first packet based on the second packet.

Step S707 is equivalent to a reverse operation of step S704, and a function of restoring an encapsulation format of the original packet is implemented. In other words, the scrubbed traffic is restored from an encapsulation format of the SRv6 packet to the encapsulation format of the original packet, so that the protected network does not need to detect and identify a change of an encapsulation format of a packet in an injection process.

Optionally, the second router performs step S707 based on the SRv6 SID added by the protection system. For example, in step S707, the second router obtains, from the second packet, the SRv6 SID added by the protection system. The second router queries a local SID table based on the SRv6 SID, to obtain an instruction, for removing the SRv6 related information, bound to the SRv6 SID. The second router executes, based on the second packet, the instruction for removing the SRv6 related information, to obtain the first packet.

Step S708: The second router sends the first packet to the protected network.

In the method provided in this embodiment, the protection system encapsulates an SRv6 SID of a router at an upstream of the protected network into the scrubbed traffic, so that the scrubbed traffic can be directed to the router at the upstream of the protected network by using the SRv6 SID, to implement traffic injection. In addition, each hop of router on the injection link can forward the scrubbed traffic based on IPv6, and each hop of router on the injection link does not need to be upgraded to support SRv6. Therefore, implementation complexity is reduced to some extent.

The embodiment shown in FIG. 7 described above describes how to implement traffic injection in an SRv6 manner. This application further provides some further detailed implementations of step S704 in the embodiment shown in FIG. 7, to help avoid a routing loop when the injection router and the traffic diversion router are the same router.

With reference to the application scenario shown in FIG. 4, the routing loop refers to a case in which during traffic injection, the protection device C sends the scrubbed traffic to the router A, and the router A searches a routing table, and then sends the scrubbed traffic back to the protection device C. In such a routing loop, the scrubbed traffic cannot reach the protected network because the scrubbed traffic keeps circulated in a loop of the protection device C→the router A-the protection device C.

It is found by the inventor of this application that a reason for causing the routing loop is that, in a traffic diversion phase, the protection device C advertises a traffic diversion route to the router A. A destination IP address in the traffic diversion route points to a protected object in the protected network, and a next hop points to the protection device C, so that the router A sends the to-be-scrubbed traffic to the protection device C based on the traffic diversion route. In an injection phase, if the router A serves as the injection router and the destination address in the IPv6 basic header at the outer layer of the scrubbed traffic still points to the protected object in the protected network, when the router A receives the scrubbed traffic and searches a routing and forwarding table based on the destination address in the IPv6 basic header at the outer layer of the scrubbed traffic, the traffic diversion route is matched. Because a next hop on the traffic diversion route points to the protection device C, the router A sends the scrubbed traffic back to the protection device C, to form the routing loop.

In view of this, in some implementations provided in this application, the IPv6 basic header at the outer layer of the scrubbed traffic does not carry an actual destination IP address (namely, an IP address of the protected object in the protected network), but carries an IPv6 address (such as an SRv6 SID) of a downstream node of the injection router. Therefore, after the router A receives the scrubbed traffic, when the router A searches the routing and forwarding table based on the destination address in the IPv6 basic header at the outer layer of the scrubbed traffic, the router A queries the routing and forwarding table based on the IPv6 address (such as the SRv6 SID) of the downstream node of the router A, to send the scrubbed traffic to the downstream node, so as to avoid the routing loop caused by matching the traffic diversion route based on the actual destination IP. In addition, the actual destination IP is encapsulated into a packet header at an inner layer of the IPv6 basic header. Therefore, the actual destination IP can still be transmitted to an egress node on the injection link with the scrubbed traffic, so that the egress node on the injection link forwards the scrubbed traffic to the protected network based on the actual destination IP address.

There are a plurality of implementations of how to make the IPv6 basic header at the outer layer of the scrubbed traffic carry the IPv6 address of the downstream node of the injection router. The following provides descriptions by using an implementation (1) and an implementation (2) as examples.

Implementation (1): An IPv6 basic header is added.

When the implementation (1) is used, step S704 includes: The protection system adds an IPv6 basic header to an outer layer of the first packet. Step S707 includes: The second router removes the IPv6 basic header at the outer layer of the second packet.

A destination address field of the IPv6 basic header carries an SRv6 SID of a downstream node of the first router on a first injection link. The downstream node is, for example, the second router, or a transit node located between the protection system and the second router on the injection link.

In a possible implementation, when an SRv6 BE manner is used, the protection system includes the SRv6 SID of the second router in the destination address field of the IPv6 basic header. When an SRv6 TE manner is used, the protection system includes an SRv6 SID of a next-hop SRv6 node of the first router in the destination address field of the IPv6 basic header, and includes the SRv6 SID of the second router in an SRH. An ingress node on the first injection link is the protection system, and an egress node on the first injection link is the second router.

When the implementation (1) is used, the second packet has IP in IP (an IP protocol in an IP protocol) encapsulation format. IP in IP means that an IP protocol packet is carried based on an IP protocol. The packet using this manner usually includes two IP basic headers. For example, the second packet includes the IPv6 basic header at the outer layer and an IP header at an inner layer, where the IPv6 basic header at the outer layer is added by the protection system, and the IP header at the inner layer is an IP header included in the original packet. Refer to FIG. 7. The first packet is, for example, an original packet 21 (1) in FIG. 7, and the second packet is, for example, an SRv6 packet 22 (1) in FIG. 7. As shown in S704 (1) in FIG. 7 for step S704 based on the implementation (1), the protection device C adds, to an outer layer of an IP header of the original packet 21 (1), an IPv6 basic header in which a destination address is an SRv6 SID of a router B, to obtain an SRv6 packet 22 (2). As shown in S707 (1) in FIG. 7 for step S707 based on the implementation (1), the router removes the IPv6 basic header at the outer layer from the SRv6 packet 22 (2), to restore the SRv6 packet 22 (2) to the original packet 21 (1).

The protection system adds the IPv6 basic header, so that the scrubbed traffic can be forwarded, based on the destination address in the newly added IPv6 basic header, from the first router to the downstream node of the first router, to implement a function of avoiding a routing loop. In addition, the actual destination IP is still carried in the IP header at the inner layer without a loss, so that the egress node on the injection link forwards the scrubbed traffic to the protected network based on the destination IP address in the IP header at the inner layer.

The implementation (1) is, for example, applied to the scenario 1 (injection of IPv4 traffic) described in step S701, or applied to the scenario 2 (injection of IPv6 traffic) described in step S701.

When the implementation (1) is used in the scenario 1, step S704 includes: The protection system adds an IPv6 basic header to an outer layer of an IPv4 header of the first packet. The second packet has an IPv4 in IPv6 encapsulation format. The second packet includes the IPv6 basic header at the outer layer and an IPv4 header at the inner layer, where the IPv4 header at the inner layer is the IPv4 header of the first packet.

When the implementation (1) is used in the scenario 2, step S704 includes: The protection system adds an IPv6 basic header to an outer layer of an IPv6 header of the first packet. The second packet has an IPv6 in IPv6 encapsulation format. The second packet includes the IPv6 basic header at the outer layer and an IPv6 header at the inner layer.

Implementation (2): The IPv6 basic header of the original packet is updated.

The implementation (2) is applied to the scenario 2 described in step S701. In other words, the first packet is an IPv6 packet, and the first packet includes an IPv6 basic header.

When the implementation (2) is used, step S704 includes: The protection system updates content of a destination address field of the IPv6 basic header of the first packet to the SRv6 SID of the second router, to obtain the second packet. Step S707 includes: The second router updates the content of the destination address field of the IPv6 basic header of the first packet to the IP address of the protected object in the protected network, namely, the actual destination IP address.

In addition, optionally, the protection system includes the content (namely, the IP address of the protected object in the protected network or the actual destination IP address) that is of the destination address field of the IPv6 basic header of the first packet and that is not updated in a packet header other than the IPv6 basic header, to avoid a loss of the actual destination IP address and enable the destination IP address of the scrubbed traffic to be switched back to the actual destination IP address. Step S707 includes: The second router obtains the actual destination IP from the packet header other than the IPv6 basic header of the second packet.

Optionally, a packet header that is in the second packet and that is for carrying the actual destination IP address is an SRH. For example, step S704 includes an action of updating the destination address, and includes: The protection system adds an SRH to an inner layer of the IPv6 basic header of the first packet. The SRH includes the content that is of the destination address field of the IPv6 basic header of the first packet and that is not updated, namely, the actual destination IP address.

In a possible implementation, in an optional type length value (type length value, TLV) part in the SRH, a TLV is extended, and the extended TLV is for carrying the actual destination IP address. Step S707 includes: The second router obtains the actual destination IP from the TLV in the SRH of the second packet.

Alternatively, a packet header that is in the second packet and that is for carrying the actual destination IP address is a destination options header (Destination Options Header, DOH). In a possible implementation, if the first packet includes a DOH, the protection system writes the actual destination IP address into the DOH of the first packet. For example, a destination option is extended, and the destination option is for carrying the actual destination IP address. In another possible implementation, if the first packet does not include a DOH, the protection system adds the DOH to the inner layer of the IPv6 basic header of the first packet, where the added DOH is for carrying the actual destination IP address.

In the foregoing implementation, in a scenario in which the original packet is an IPv6 packet, a problem of the routing loop is resolved. In addition, an IPv6 basic header does not need to be added additionally, and the IPv6 basic header of the original packet can be reused, to reduce overheads and improve flexibility.

The foregoing describes some detailed implementations in step S704 from a perspective of how to avoid the routing loop. This application further provides some other detailed implementations for step S704, to support injection based on a customized path. The injection based on the customized path means that an injection link that meets a constraint condition is established, so that scrubbed traffic is transmitted to the protected network along the specified path, to implement traffic engineering. The following describes the implementations of how to perform injection based on the customized path by using an example.

The implementations described below involve a mechanism for selecting a plurality of injection links or a plurality of segment lists. To distinguish between different injection links, the "first injection link" and a "second injection link" are for distinguishing between and describing different injection links between the protection system and the second router. To distinguish between different segment lists, a "first segment list" and a "second segment list" are for describing segment lists of different injection links.

In some implementations, the protection system uses source routing and a capability of programming a path in an SRv6 technology to perform traffic injection based on the SRv6 TE policy mode, to implement traffic injection based on the customized path.

For example, the foregoing step S704 includes: The protection system adds an SRH to the first packet, where the SRH includes a first segment list. Step S707 includes: The second router removes the SRH of the second packet.

The first segment list represents the first injection link, and the first segment list includes the SRv6 SID of the second router and an SRv6 SID of at least one transit node through which the first injection link passes. The ingress node on the first injection link is the protection system, and the egress node on the first injection link is the second router.

In the foregoing implementation, the segment list is added to the scrubbed traffic, where the segment list includes an SRv6 SID of the egress node (the second router) on the injection link and the SRv6 SID of the transit node. This is equivalent to explicitly specifying a part or all of transit nodes through which the injection link needs to pass in the scrubbed traffic, in other words, a specific constraint is imposed on the injection link. This helps meet a requirement of a user-defined injection link.

The following describes implementations of adding an SRH by using an example from a perspective of an encapsulation mode of the SRH. Refer to the following implementation I and implementation II.

Implementation I: The protection system adds an SRH to the outer layer of the first packet.

In other words, the SRH is added to the scrubbed traffic in an encapsulation mode.

The implementation I and the foregoing implementation (1) are optionally combined for implementation. In a combination of the two implementations, the foregoing step S704 includes, for example: The protection system adds an IPv6 basic header and an SRH to the outer layer of the first packet. The IPv6 basic header is encapsulated into an outer layer of the SRH. Step S707 includes, for example: The second router removes the IPv6 basic header and the SRH at the outer layer the second packet, to obtain the first packet. A destination address field of the IPv6 basic header carries an SRv6 SID of a next-hop SRv6 node of the first router. A segment list in the SRH includes the SRv6 SID of the second router.

Implementation II: The protection system inserts an SRH into an inner layer of the IPv6 basic header of the first packet.

In other words, the SRH is added to the scrubbed traffic in an insert mode.

The implementation II and the foregoing implementation (2) are optionally combined for implementation. In a combination of the two implementations, step S704 includes, for example: The protection system updates the content of the destination address field of the IPv6 basic header of the first packet to the SRv6 SID of the second router, and inserts the SRH into the inner layer of the IPv6 basic header of the first packet. Step S707 includes, for example: The second router updates the content of the destination address field of the IPv6 basic header at the outer layer of the second packet to the destination address of the protected object in the protected network, and makes the SRH of the second packet pop up, to obtain the first packet.

In the foregoing implementation I and implementation II, two SRv6 encapsulation modes, namely, the insert mode and the encapsulation mode, are supported, to improve flexibility.

The foregoing describes some detailed implementations that may be used in step S704 from the perspective of the encapsulation mode of the SRH. This application further provides some other detailed implementations for step S704, to implement finer-grained control on the injection link, so as to meet a service requirement as much as possible, for example, avoid congestion on the injection link, ensure bandwidth of the injection link, reduce an injection delay, and improve injection reliability. The following provides descriptions by using an example.

In some implementations, the protection system automatically selects a segment list based on a requirement, to control an injection link through which the scrubbed traffic passes. For example, the first injection link and the second injection link exist between the protection system and the second router. The protection system selects the first segment list from the first segment list and the second segment list based on quality of the first injection link and quality of the second injection link, and adds the selected first segment list to the SRH. The first segment list represents the first injection link, the second segment list represents the second injection link, and the quality of the first injection link is higher than the quality of the second injection link.

Quality of an injection link is determined based on at least one of congestion, a delay, a packet loss rate, bandwidth, or overheads. The quality of the first injection link is higher than the quality of the second injection link. For example, congestion of the first injection link is less severe than congestion of the second injection link. For example, the first injection link does not pass through a congested node or a congested link. For another example, a delay of the first injection link is less than a delay of the second injection link. For another example, available bandwidth of the first injection link is greater than available bandwidth of the second injection link. For another example, overheads of the first injection link are less than overheads of the second injection link.

There are many manners for the protection system to determine the quality of the injection link. For example, a node through which the injection link passes actively reports the quality of the injection link to the protection system. For another example, the protection system sends a detection packet to a node through which the injection link passes, and determines the quality of the injection link based on a returned response packet.

In the foregoing implementation, when there are a plurality of traffic injection links, the protection system can automatically select the injection link based on a requirement. For example, if one injection link is congested, a segment list of another injection link is selected for injection, to reduce impact of network congestion on the injection. For another example, if bandwidth usage of one injection link is low and the injection link is idle currently, a segment list of the injection link is selected for injection, to improve the bandwidth usage.

A segment list is generated in a plurality of implementations. The following provides descriptions by using an example with reference to a generation manner 1 and a generation manner 2.

Generation manner 1: A controller performs path computation based on topology information, to obtain a segment list.

In a possible implementation, the protection system obtains topology information of an IPv6 network, and the protection system sends the topology information of the IPv6 network to the controller. The controller receives the topology information of the IPv6 network, and the controller determines the first segment list and the second segment list based on the topology information of the IPv6 network. The controller sends the first segment list and the second segment list to the protection system. The protection system receives the first segment list and the second segment list from the controller.

The topology information of the IPv6 network is topology information of an IPv6 network that is between the first router and the second router and that the injection link traverses. The topology information of the IPv6 network includes but is not limited to an identifier of a node and an identifier of a link in the IPv6 network, and overheads, bandwidth, and a delay of the link. A protocol based on which the protection system sends the topology information of the IPv6 network is, for example, BGP LS. A protocol based on which the controller sends the segment list is, for example, BGP SR-policy extension.

An example in which the protection system and the controller are separately deployed is used above to describe the process. The protection system is responsible for topology collection and reporting, and the controller is responsible for path computation and path delivery. In some other embodiments, the protection system and the controller are integrated for implementation. When the protection system and the controller are integrated for implementation, steps performed by the controller are performed by the protection system.

Generation manner 2: A network administrator statically configures a segment list.

For example, the network administrator triggers a configuration operation on the protection system, and inputs the first segment list and the second segment list.

The following describes an implementation in which the protection system obtains an SRv6 SID of a router by using an example.

A process of obtaining the SRv6 SID of the second router is used as an example. For example, the second router generates an advertisement packet, and sends the advertisement packet to the protection system. The protection system receives the advertisement packet from the second router, and the protection system obtains the SRv6 SID of the second router from the advertisement packet.

The advertisement packet is for advertising the SRv6 SID of the second router. The advertisement packet carries the SRv6 SID of the second router. For example, the advertisement packet is an interior gateway protocol (interior gateway protocol, IGP) packet. For another example, the advertisement packet is a border gateway protocol (border gateway protocol, BGP) packet. In a possible implementation, when the protection system and the second router belong to a same autonomous system (autonomous system, AS) domain, the second router advertises the SRv6 SID of the second router by using the IGP packet. When the protection system and the second router belong to different AS domains, the second router advertises the SRv6 SID of the second router by using the border gateway protocol (border gateway protocol, BGP) packet.

Optionally, the second router further sends the advertisement packet to a node supporting SRv6 in the IPv6 network, so that the node supporting SRv6 in the IPv6 network routes and forwards the scrubbed traffic to the second router based on the SRv6 SID.

The foregoing describes some embodiments of performing traffic injection in the SRv6 manner. The following describes the foregoing injection process by using an example with reference to the application scenario shown in FIG. 4. Refer to an example 1 and an example 2. The example 2 shows a process of performing SRv6 TE based injection in the application scenario shown in FIG. 4.

### Example 1: SRv6 BE based injection

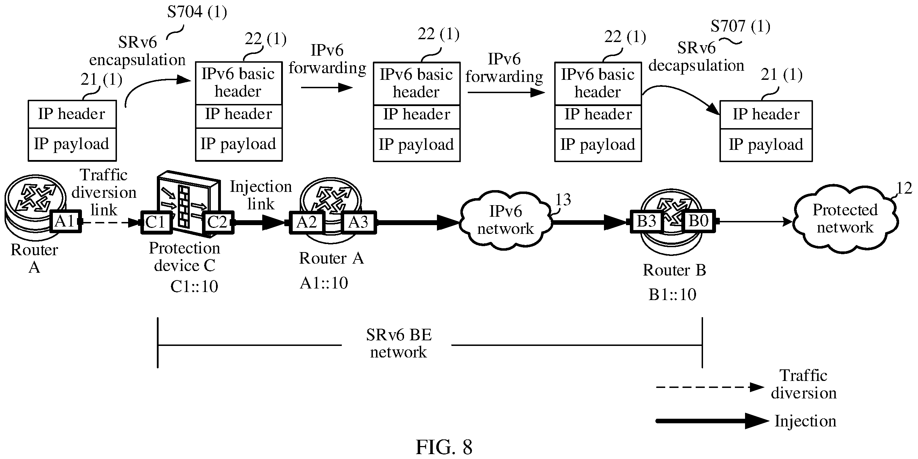

FIG. 8 is a flowchart of SRv6 based packet injection processing according to an embodiment of this application. A topology shown in FIG. 8 is a tile structure of the network topology in FIG. 4. A protection device C and a router B support SRv6. A router A supports a function of forwarding an IPv6 packet. C 1: : 10 in FIG. 8 represents an IPv6 address of the protection device C. A1::10 represents an IPv6 address of the router A. B1::10 represents an IPv6 address of the router B, and B1::10 is an SRv6 SID of the router B. S704 (1) in FIG. 8 is an implementation that may be used in S704 in the method shown in FIG. 7. S707 (1) in FIG. 8 is an implementation that may be used in S707 in the method shown in FIG. 7. A packet 22 (1) in FIG. 8 is an example of the second packet in the method shown in FIG. 7, and a packet 21 (1) in FIG. 8 is an example of the first packet in the method shown in FIG. 7.

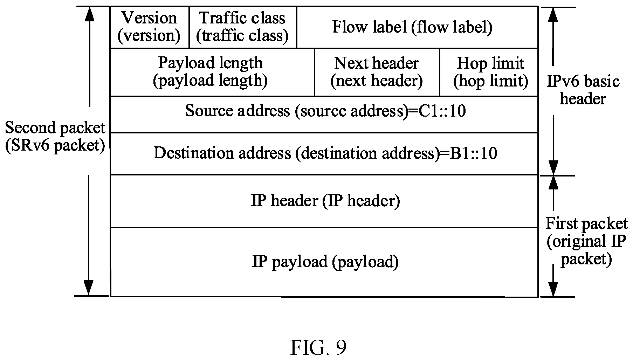

During traffic injection, the protection device C is a start node on an SRv6 path. The protection device C receives a to-be-scrubbed IP packet flow from the router A, scrubs the IP packet flow, and performs S704 (1), to encapsulate SRv6 header information into each original IP packet. The SRv6 header information is encapsulated, in other words, a new IPv6 header is added. A destination IP address in the newly added IPv6 header is an SID. The SID indicates a packet to be forwarded, based on a shortest path, to a parent node (namely, the router B) that generates the SID, and the node executes an instruction for binding the SID. FIG. 9 is a schematic diagram of an encapsulation format of an SRv6 packet obtained by performing S704 (1) according to this embodiment. As shown in FIG. 9, the SRv6 packet generated by the protection device C includes the original IP packet and a newly added IPv6 basic header. A destination address in the newly added IPv6 basic header is the SRv6 SID of the router B, namely, B1::10. A source address in the newly added IPv6 basic header is the IPv6 address of the protection device C, namely, C1::10.

After the SRv6 packet is sent to the router A, the router A forwards the SRv6 packet as a common IPv6 packet. Because the IPv6 header is newly added to the packet, no loop occurs. The SRv6 packet reaches the router B through an intermediate IPv6 network. The router B serves as a termination node on an SRv6 path. If the router B finds a local SID matching the destination IP address, the router B performs S707 (1), decapsulates the packet, removes an SRv6 header, and sends the original IP packet to a protected network.

### Example 2: SRv6 TE based injection

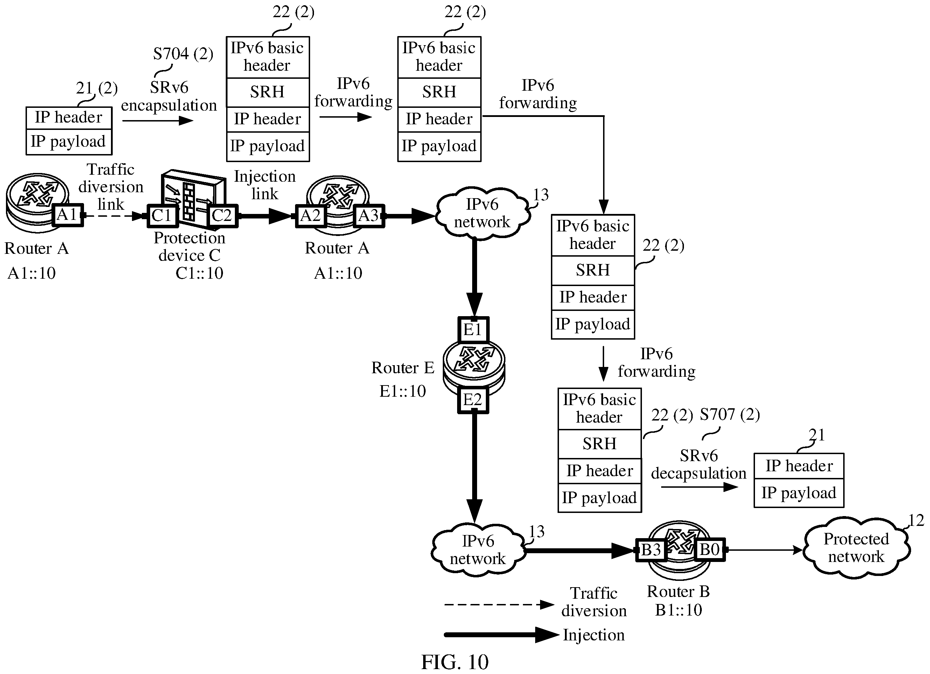

FIG. 10 is a flowchart of SRv6 based packet injection processing according to an embodiment. A topology shown in FIG. 10 is a tile structure of the network topology in FIG. 4. A protection device C, a router B, and a router E support SRv6. The protection device C is a start node on an SRv6 path. The router E is a transit node on the SRv6 path. The router B is a termination node on the SRv6 path.

A router A supports a function of forwarding an IPv6 packet. There is a network node that supports SRv6 in an IPv6 network, for example, the router E. S704 (2) in FIG. 10 is an implementation that may be used in S704 in the method shown in FIG. 7. S707 (2) in FIG. 10 is an implementation that may be used in S707 in the method shown in FIG. 7. A packet 22 (2) in FIG. 10 is an example of the second packet in the method shown in FIG. 7, and a packet 21 (2) in FIG. 8 is an example of the first packet in the method shown in FIG. 7.

During traffic injection, the protection device C receives a to-be-scrubbed IP packet flow from the router A, scrubs the IP packet flow, and performs S704 (2), to encapsulate SRv6 header information into each original IP packet. The encapsulated SRv6 header information includes a newly added IPv6 basic header and a newly added SRH. A segment list representing an IPv6 forwarding path is added to the SRH.

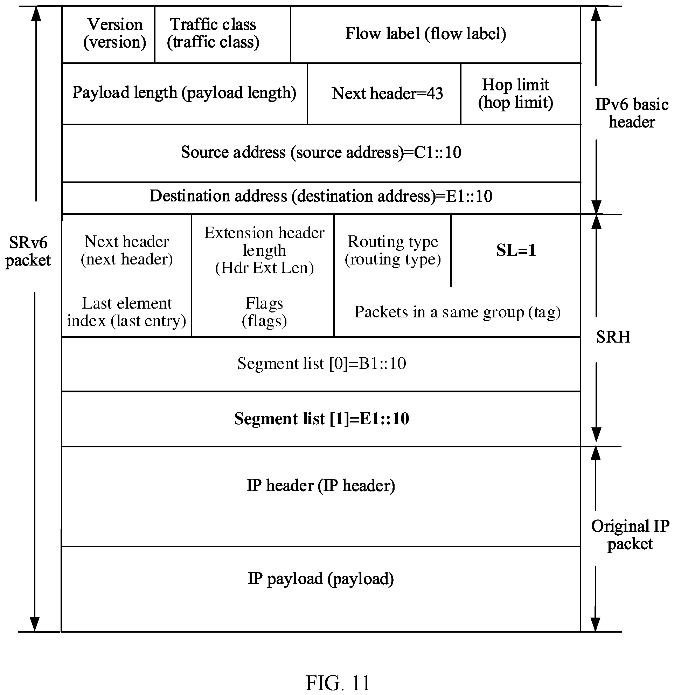

FIG. 11 is a schematic diagram of an encapsulation format of an SRv6 packet obtained by performing S704 (2) according to this embodiment. As shown in FIG. 11, an SRv6 packet generated by the protection device C includes an original IP packet, the newly added IPv6 basic header, and the newly added SRH.

A destination address in the newly added IPv6 basic header is an SRv6 SID of the router B, namely, B1::10. A source address in the newly added IPv6 basic header is an IPv6 address of the protection device C, namely, C1::10. A value of a next header (next header) of the newly added IPv6 basic header is 43, indicating that the next header of the IPv6 basic header is the SRH. The newly added SRH includes two SRv6 SIDs: an SRv6 SID of the router B, namely, B1::10, and an SRv6 SID of the router E, namely, E1::10. After the SRv6 packet is sent to the router A, the router A forwards the SRv6 packet as a common IPv6 packet.

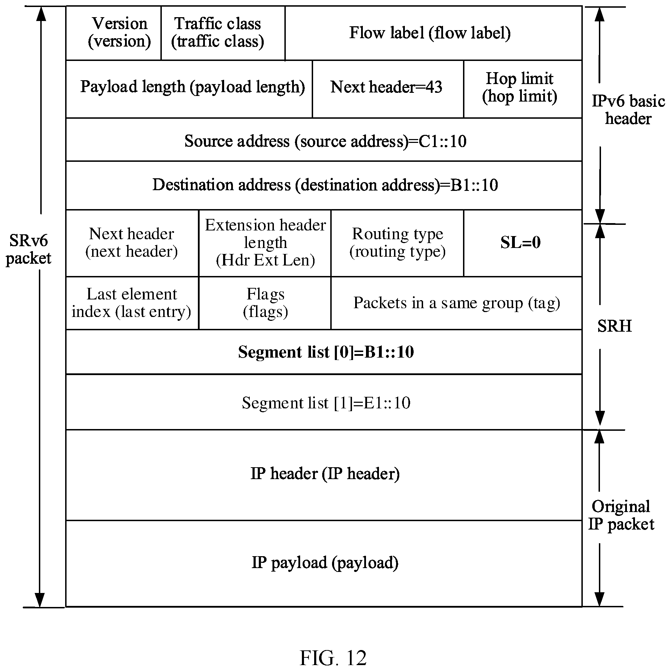

The SRv6 packet reaches the router E through an intermediate IPv6 network. The router E supports a function of SRv6. After the router E receives the SRv6 packet, the router E obtains the SRv6 SID of the router B, namely, B1::10, from a segment list in the SRH. The router E refreshes a destination IP address in an IPv6 basic header at an outer layer to B1::10 and decreases a value of an SL field by 1. FIG. 12 is a schematic diagram of an encapsulation format of the SRv6 packet generated and sent by the router E. After receiving the SRv6 packet, the router B decapsulates the packet, removes an SRv6 header, and sends the original IP packet to a protected network.

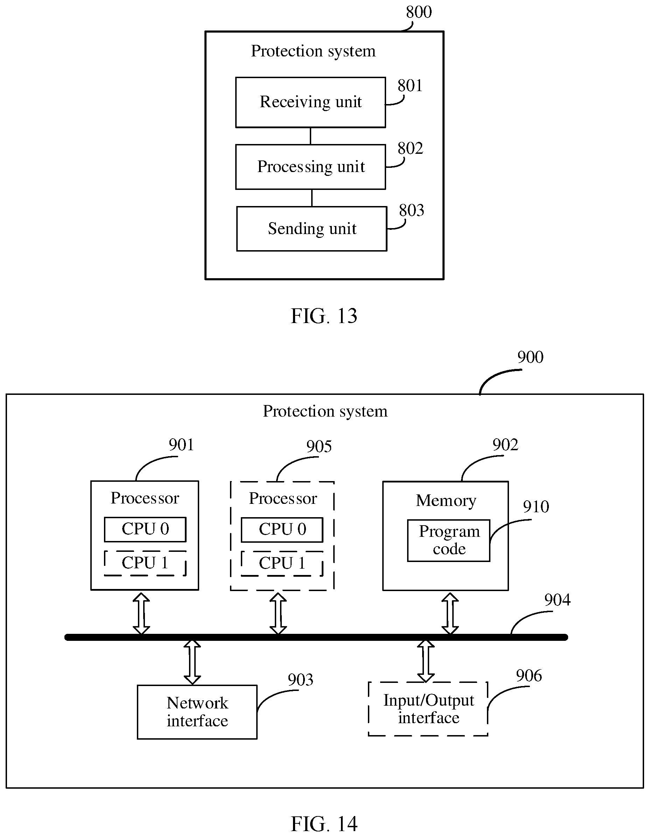

FIG. 13 is a schematic diagram of a structure of a protection system 800 according to an embodiment of this application. The protection system 800 includes a receiving unit 801, a processing unit 802, and a sending unit 803.

The following describes how functional units in the protection system 800 interact to execute the technical solution with reference to the application scenarios and method steps described above.

Optionally, with reference to the application scenario shown in FIG. 4, the protection system 800 shown in FIG. 13 is, for example, the protection device C in FIG. 4. The receiving unit 801 is, for example, the interface C1 in FIG. 4, and the receiving unit 801 is configured to receive to-be-scrubbed traffic from the interface A1 in FIG. 4. The processing unit 802 is implemented by using a processor (which is not shown in the figure) of the protection device C. The processing unit 802 is configured to scrub the to-be-scrubbed traffic received by the interface C1, as shown in FIG. 4, to obtain scrubbed traffic, for example, the original packet 21 shown in FIG. 4. The processing unit 802 is further configured to add SRv6 related information to a packet in the scrubbed traffic, to generate a series of SRv6 packets, for example, the SRv6 packet 22 shown in FIG. 4. The sending unit 803 is, for example, the interface C2 in FIG. 4. The processing unit 802 indicates the interface C2 to send the SRv6 packet 22 to the interface A2.

Optionally, with reference to the method process shown in FIG. 7, the protection system 800 shown in FIG. 13 is the protection system in FIG. 7. The receiving unit 801 is configured to perform S702. The processing unit 802 is configured to perform S703 and S704. The sending unit 803 is configured to perform S705.

The apparatus embodiment described inFIG. 13 is merely an example. For example, division into the units is merely logical function division. During actual implementation, another division manner may be used. For example, a plurality of units or components may be combined or integrated into another system, or some features may be ignored or may not be performed. Functional units in embodiments of this application may be integrated into one processing unit, each of the units may exist alone physically, or two or more than two units are integrated into one unit.

All or a part of the units in the protection system 800 are implemented by using software, hardware, firmware, or any combination thereof.

With reference to a protection system 900 described in FIG. 14, the following describes some possible implementations of implementing functional units in the protection system 800 by using hardware or software.

When software is used for implementation, for example, the processing unit 802 is implemented by a software functional unit that is generated after a processor 901 reads program code stored in a memory 902 in FIG. 14.

When hardware is used for implementation, for example, the processing unit 802 in FIG. 13 is implemented by a part of processing resources (for example, one core or two cores in a multi-core processor) in the processor 901 in FIG. 14, or implemented by a programmable device such as a field-programmable gate array (field-programmable gate array, FPGA) or a coprocessor. The receiving unit 801 and the sending unit 803 are implemented by a network interface 903 in FIG. 14.

The following describes a basic hardware structure of a protection system by using an example.

FIG. 14 is a schematic diagram of a structure of a protection system 900 according to an embodiment of this application. The protection system 900 includes a processor 901, a memory 902, and a network interface 903.

Optionally, with reference to the application scenario shown in FIG. 4, the protection system 900 shown in FIG. 14 is the protection device C in FIG. 4. The network interface 903 includes the interface C1 and the interface C2 in FIG. 4, and the network interface 903 is configured to receive to-be-scrubbed traffic from the interface A1 in FIG. 4. The processor 901 is configured to scrub the to-be-scrubbed traffic received by the interface C1, as shown in FIG. 4, to obtain scrubbed traffic, for example, the original packet 21 shown in FIG. 4. The processor 901 is further configured to add SRv6 related information to a packet in the scrubbed traffic, to generate a series of SRv6 packets, for example, the SRv6 packet 22 shown in FIG. 4. The processor 901 indicates the interface C2 to send the SRv6 packet 22 to the interface A2.

Optionally, with reference to the method process shown in FIG. 7, the protection system 900 shown in FIG. 14 is the protection system in FIG. 7. The network interface 903 is configured to perform S702. The processor 901 is configured to perform S703 and S704, and indicates the network interface 903 to perform S705.

The processor 901 is, for example, a general-purpose central processing unit (central processing unit, CPU), a network processor (network processor, NP), a graphics processing unit (graphics processing unit, GPU), a neural network processor (neural network processing unit, NPU), a data processing unit (data processing unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field programmable gate array, FPGA), a generic array logic (generic array logic, GAL), or any combination thereof.

The memory 902 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that is accessible by a computer, but is not limited thereto. Optionally, the memory 902 exists independently and is connected to the processor 901 by an internal connection 904. Alternatively, the memory 902 is optionally integrated with the processor 901.

The network interface 903 uses any apparatus such as a transceiver, and is configured to communicate with another device or a communication network. The network interface 903 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, such as a CPU 0 and a CPU 1 shown in FIG. 14.

In some embodiments, the protection system 900 optionally includes a plurality of processors, such as the processor 901 and a processor 905 shown in FIG. 14. Each of these processors is, for example, a single-core processor (single-CPU) or a multi-core processor (multi-CPU). The processor herein optionally refers to one or more devices, circuits, and/or processing cores configured to process data (for example, computer program instructions).

In some embodiments, the protection system 900 further includes the internal connection 904. The processor 901, the memory 902, and the at least one network interface 903 are connected by the internal connection 904. The internal connection 904 includes a pathway, for transferring information between the foregoing components. Optionally, the internal connection 904 is a board or bus. Optionally, the internal connection 904 is classified into an address bus, a data bus, a control bus, and the like.

In some embodiments, the protection system 900 further includes an input/output interface 906. The input/output interface 906 is connected to the internal connection 904.

Optionally, the processor 901 implements the method in the foregoing embodiment by reading program code 910 stored in the memory 902, or the processor 901 implements the method in the foregoing embodiment by reading internally stored program code. When the processor 901 implements the method in the foregoing embodiment by reading the program code 910 stored in the memory 902, the memory 902 stores program code that implements the method provided in embodiments of this application.

For more details of implementing the foregoing functions by the processor 901, refer to the descriptions in the foregoing method embodiments. Details are not described herein again.

Embodiments in this specification are described in a progressive manner. For same or similar parts in embodiments, refer to each other. Each embodiment focuses on a difference from other embodiments.

A refers to B, which means that A is the same as B or A is a simple variant of B.

In the specification and claims in embodiments of this application, terms "first", "second", and the like are for distinguishing between different objects, but are not intended to describe a specific order of the objects, and cannot be understood as an indication or implication of relative importance.

In embodiments of this application, unless otherwise specified, "at least one" means one or more, and "a plurality of" means two or more than two. For example, a plurality of injection links refer to two or more than two injection links.

All or a part of the foregoing embodiments may be implemented by using software, hardware, firmware, or any combination thereof. When software is used for implementation, all or a part of embodiments may be implemented in a form of a computer program product. The computer program product includes one or more computer instructions. When the computer program instructions are loaded and executed on a computer, all or a part of the processes or functions described in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to a part of technical features, and such modifications or replacements do not cause the essence of the corresponding technical solutions to depart from the scope of embodiments of this application.

## Claims

1. A traffic injection method, wherein the method comprises:
receiving, by a protection system, to-be-scrubbed traffic from a first router, wherein the protection system is deployed on the first router in a bypass mode, and the to-be-scrubbed traffic is traffic sent from an external network to a protected network;
scrubbing, by the protection system, the to-be-scrubbed traffic, to obtain scrubbed traffic;
for a first packet comprised in the scrubbed traffic, obtaining, by the protection system, a second packet based on the first packet, wherein the second packet is a segment routing over internet protocol version 6 SRv6 packet, the second packet comprises an SRv6 segment identifier SID of a second router, the SRv6 SID of the second router is an internet protocol version 6 IPv6 address of the second router, the second router and the first router are connected through an IPv6 network, and the second router is deployed between the IPv6 network and the protected network; and
sending, by the protection system, the second packet to the second router.

2. The method according to claim 1, wherein the obtaining, by the protection system, a second packet based on the first packet comprises:
adding, by the protection system, an IPv6 basic header to an outer layer of the first packet, to obtain the second packet, wherein a destination address field of the IPv6 basic header carries an SRv6 SID of a downstream node of the first router on a first injection link, an ingress node on the first injection link is the protection system, and an egress node on the first injection link is the second router.

3. The method according to claim 2, wherein the downstream node is the second router; or
the downstream node is a transit node between the protection system and the second router.

4. The method according to claim 1, wherein if the first packet is an IPv6 packet, the obtaining, by the protection system, a second packet based on the first packet comprises:
updating, by the protection system, content of a destination address field of an IPv6 basic header of the first packet to the SRv6 SID of the second router, to obtain the second packet.

5. The method according to claim 4, wherein the second packet comprises an IPv6 extension header, the IPv6 extension header comprises content that is written by the protection system and that exists in the destination address field of the IPv6 basic header of the first packet before the updating, and the IPv6 extension header is a segment routing header SRH or a destination options header.

6. The method according to any one of claims 2 to 5, wherein the method further comprises:
adding, by the protection system, an SRH to the first packet, to obtain the second packet, wherein the SRH comprises a first segment list, the first segment list comprises the SRv6 SID of the second router and an SRv6 SID of at least one transit node through which the first injection link passes, the ingress node on the first injection link is the protection system, and the egress node on the first injection link is the second router.

7. The method according to claim 6, wherein the adding, by the protection system, an SRH to the first packet comprises:
adding, by the protection system, the SRH to the outer layer of the first packet; or
inserting, by the protection system, the SRH into an inner layer of the IPv6 basic header of the first packet.

8. The method according to claim 6 or 7, wherein the first injection link and a second injection link exist between the protection system and the second router, and before the adding, by the protection system, an SRH to the first packet, the method further comprises:
selecting, by the protection system, the first segment list from the first segment list and a second segment list based on quality of the first injection link and quality of the second injection link, wherein the first segment list represents the first injection link, the second segment list represents the second injection link, the quality of the first injection link is higher than the quality of the second injection link, and the quality of the first injection link or the quality of the second injection link is determined based on at least one of congestion, a delay, a packet loss rate, bandwidth, or overheads.

9. The method according to any one of claims 6 to 8, wherein before the adding, by the protection system, an SRH to the first packet, the method further comprises:
sending, by the protection system, topology information of the IPv6 network to a controller; and
receiving, by the protection system, the first segment list from the controller, wherein the first segment list is determined by the controller based on the topology information of the IPv6 network.

10. The method according to any one of claims 1 to 9, wherein the SRv6 SID of the second router comprises locating information and function information, the locating information indicates a location of the second router, and the function information indicates the second router to perform SRv6 decapsulation.

11. The method according to any one of claims 1 to 10, wherein the method further comprises:
receiving, by the protection system, an advertisement packet from the second router, wherein the advertisement packet is for advertising the SRv6 SID of the second router.

12. A protection system, wherein the protection system comprises:
a receiving unit, configured to receive to-be-scrubbed traffic from a first router, wherein the protection system is deployed on the first router in a bypass mode, and the to-be-scrubbed traffic is traffic sent from an external network to a protected network;
a processing unit, configured to: scrub the to-be-scrubbed traffic, to obtain scrubbed traffic; and for a first packet comprised in the scrubbed traffic, obtain a second packet based on the first packet, wherein the second packet is a segment routing over internet protocol version 6 SRv6 packet, the second packet comprises an SRv6 segment identifier SID of a second router, the SRv6 SID of the second router is an internet protocol version 6 IPv6 address of the second router, the second router and the first router are connected through an IPv6 network, and the second router is deployed between the IPv6 network and the protected network; and
a sending unit, configured to send the second packet to the second router.

13. The protection system according to claim 12, wherein the processing unit is configured to add an IPv6 basic header to an outer layer of the first packet, to obtain the second packet, wherein a destination address field of the IPv6 basic header carries an SRv6 SID of a downstream node of the first router on a first injection link, an ingress node on the first injection link is the protection system, and an egress node on the first injection link is the second router.

14. The protection system according to claim 13, wherein the downstream node is the second router; or
the downstream node is a transit node between the protection system and the second router.

15. The protection system according to claim 12, wherein if the first packet is an IPv6 packet, the processing unit is configured to update content of a destination address field of an IPv6 basic header of the first packet to the SRv6 SID of the second router, to obtain the second packet.

16. The protection system according to claim 15, wherein the second packet comprises an IPv6 extension header, the IPv6 extension header comprises content that is written by the protection system and that exists in the destination address field of the IPv6 basic header of the first packet before the updating, and the IPv6 extension header is a segment routing header SRH or a destination options header.

17. The protection system according to any one of claims 13 to 16, wherein the processing unit is further configured to add an SRH to the first packet, to obtain the second packet, wherein the SRH comprises a first segment list segment list, the first segment list comprises the SRv6 SID of the second router and an SRv6 SID of at least one transit node through which the first injection link passes, the ingress node on the first injection link is the protection system, and the egress node on the first injection link is the second router.

18. The protection system according to claim 17, wherein the processing unit is configured to: add the SRH to the outer layer of the first packet; or insert the SRH into an inner layer of the IPv6 basic header of the first packet.

19. The protection system according to claim 17 or 18, wherein the first injection link and a second injection link exist between the protection system and the second router, and the processing unit is further configured to select the first segment list from the first segment list and the second segment list based on quality of the first injection link and quality of the second injection link, wherein the first segment list represents the first injection link, the second segment list represents the second injection link, the quality of the first injection link is higher than the quality of the second injection link, and the quality of the first injection link or the quality of the second injection link is determined based on at least one of congestion, a delay, a packet loss rate, bandwidth, or overheads.

20. The protection system according to any one of claims 17 to 19, wherein the sending unit is further configured to send topology information of the IPv6 network to a controller; and
the receiving unit is further configured to receive the first segment list from the controller, wherein the first segment list is determined by the controller based on the topology information of the IPv6 network.

21. The protection system according to any one of claims 12 to 20, wherein the SRv6 SID of the second router comprises locating information and function information, the locating information indicates a location of the second router, and the function information indicates the second router to perform SRv6 decapsulation.

22. The protection system according to any one of claims 12 to 21, wherein the receiving unit is further configured to receive an advertisement packet from the second router, wherein the advertisement packet is for advertising the SRv6 SID of the second router.

23. A protection system, wherein the protection system comprises a processor and a network interface, the processor is coupled to a memory, the network interface is configured to receive or send a packet, the memory stores at least one computer program instruction, and the at least one computer program instruction is loaded and executed by the processor, to enable the protection system to implement the method according to any one of claims 1 to 11.

24. A network system, wherein the network system comprises a router and the protection system according to any one of claims 12 to 23, wherein
the router is configured to: receive a second packet from the protection system; obtain a first packet based on the second packet; and send the first packet to a protected network.

25. A computer-readable storage medium, wherein the storage medium stores at least one instruction, and when the instruction is run on a computer, the computer is enabled to perform the method according to any one of claims 1 to 11.

26. A computer program product, wherein the computer program product comprises one or more computer program instructions, and when the computer program instructions are loaded and run by a computer, the computer is enabled to perform the method according to any one of claims 1 to 11.
